# EUROPÄISCHE PATENTSCHRIFT

(11) **EP 3 538 325 B1**
(45) Veröffentlichungstag und Bekanntmachung des Hinweises auf die Patenterteilung: **25.10.2023**
(21) Anmeldenummer: 17800386.9
(22) Anmeldetag: 14.11.2017
(51) Int. Cl.: B25J 9/04, B25J 18/02

(54) **ROBOTERARM, MOBILER ROBOTER UND LOGISTIKSYSTEM**
ROBOT ARM, MOBILE ROBOT AND LOGISTICS SYSTEM
BRAS ROBOTISÉ, ROBOT MOBILE ET SYSTÈME LOGISTIQUE

(30) Priorität: 14.11.2016 DE 102016222255; 09.12.2016 DE 102016014737
(43) Veröffentlichungstag der Anmeldung: 18.09.2019
(73) Patentinhaber: KUKA Deutschland GmbH, 86165 Augsburg (DE)
(72) Erfinder: RIEDEL, Martin, 86165 Augsburg (DE); SCHOBER, Wolfgang, 86554 Pöttmes (DE)
(74) Vertreter: Oelke, Jochen
(86) Internationale Anmeldenummer: PCT/EP2017/001329
(87) Internationale Veröffentlichungsnummer: WO 2018/086748

(56) Entgegenhaltungen:
- CN-A- 105 619 400
- CN-A- 106 078 710
- US-A1- 2013 041 509

## Beschreibung

Die Erfindung betrifft einen Roboterarm.

Aus der EP 2 102 080 B1 ist eine Vorrichtung und ein Verfahren zum Kommissionieren von Waren bekannt, mit den Schritten des Beladens wenigstens eines autarken Transportfahrzeugs mit allen zum Kommissionieren einer gemischten Palette benötigten Palettierungseinheiten, des automatisches Fahrens des mit allen zum Kommissionieren der gemischten Palette benötigten Palettierungseinheiten beladenen wenigstens einen autarken Transportfahrzeugs zu einer einen Palettierroboter aufweisenden Palettierstation und des sequenzielles Entladens der Palettierungseinheiten von dem wenigstens einen autarken Transportfahrzeug und Platzieren der Palettierungseinheiten auf eine Transportpalette zum Bilden der gemischten Palette mittels des Palettierroboters, der den wenigstens einen beladenen autarken Transportfahrzeug entsprechend eines vorab ermittelten Packmusters der gemischten Palette entlädt.

Die Druckschriften CN 105 619 400 A, CN 106 078 710 A und US 2013/041509 A1 offenbaren Roboterarme gemäß dem Oberbegriff des Anspruchs 1.

Aufgabe der Erfindung ist es, einen Roboterarm zu schaffen, mit dem Handhabungsaufgaben besonders flexibel, effizient und schnell ausgeführt werden können.

Die Aufgabe der Erfindung wird gelöst durch einen Roboterarm mit den Merkmalen des Anspruchs 1, insbesondere aufweisend:
- ein Grundgestell,
- einen am Grundgestell in einer vertikalen Richtung verschiebbar gelagerten Schlitten, und einen ersten Motor, der ausgebildet ist, den Schlitten relativ zum Grundgestell zu verstellen,

- ein am Schlitten um eine vertikale erste Drehachse schwenkbar gelagertes proximales Schwenkglied, und einen zweiten Motor, der ausgebildet ist, das proximale Schwenkglied relativ zum Schlitten zu schwenken,
- ein am proximalen Schwenkglied um eine vertikale zweite Drehachse schwenkbar gelagertes Zwischenschwenkglied, und einen dritten Motor, der ausgebildet ist, das Zwischenschwenkglied relativ zum proximalen Schwenkglied zu schwenken,
- ein am Zwischenschwenkglied um eine vertikale dritte Drehachse schwenkbar gelagertes distales Schwenkglied, und einen vierten Motor, der ausgebildet ist, das distale Schwenkglied relativ zum Zwischenschwenkglied zu schwenken,
- einen am distalen Schwenkglied um eine horizontale vierte Drehachse drehbar gelagerten Stellgliedträger, und weiter aufweisend:
- eine erste Umschaltvorrichtung, die ausgebildet ist, den Stellgliedträger zwischen einer ersten

Arretierungsschwenkstellung, in welcher der Stellgliedträger eine erste Stellung einnimmt und einer zweiten Arretierungsschwenkstellung, in welcher der Stellgliedträger eine von der ersten Stellung abweichende zweite Stellung einnimmt, zum mechanischen Umkonfigurieren der kinematischen Struktur des Roboterarms umzuschalten.

Mittels der ersten Umschaltvorrichtung kann vorteilhafter Weise der (redundante) Roboterarm in einfacher Art verändert werden. Insbesondere können zwei Glieder des Roboterarms welche durch die erste Umschaltvorrichtung verbunden sind, durch diese in ihren relativen Stellungen zueinander umkonfiguriert werden, nämlich zwischen genau zwei

Stellungen, wobei im Folgenden solche mittels der Umschaltvorrichtung zwischen zwei Stellungen umkonfigurierbaren Roboterglieder unter anderem auch als "Binärgelenke" oder "Binärachsen" bezeichnet werden, da sie genau zwei Zustände aufweisen können und für den Roboterarm betriebsfähige Zwischenstellungen nicht möglich sind.

Zusätzlich kann am Stellgliedträger eine elektrische Verbindervorrichtung gelagert sein, die einen elektrischen Kontakt zu einer komplementären Verbindervorrichtung herstellen kann. Um das Stecken der Verbindervorrichtung in die komplementäre Verbindervorrichtung zu vereinfachen, ist die Verbindervorrichtung verlagerbar am Stellgliedträger angeordnet. Dabei kann das Verlagern zwischen zwei und mehr Stellungen erfolgen. Insbesondere kann das Verlagern zwischen genau zwei Stellungen, bevorzugt mittels einer oben beschriebenen Umschaltvorrichtung bzw. einem Binärgelenk erfolgen. Alternativ oder zusätzlich kann die Verbindervorrichtung zumindest um eine erste Linearrichtung verschiebbar und/oder um eine fünfte Drehachse drehbar gelagert sein. Bevorzugt erfolgt eine rückstellfähige Lagerung der Verbindervorrichtung, insbesondere mittels eines rückstellfähigen Lagerelements, wie beispielsweise eine Federeinrichtung oder eines Elastomersverbinders. Ein Elastomerverbinder kann beispielsweise als Gummipuffer ausgebildet sein oder aus einem anderen Elastomer bestehen. Bevorzugt weise der Roboterarm ein am Stellgliedträger verstellbar gelagertes Stellglied auf, und eine zweite Umschaltvorrichtung, die ausgebildet ist, das Stellglied zwischen einer ersten Arretierungsstellung, in welcher das Stellglied eine erste Stellung einnimmt und einer zweiten Arretierungsstellung, in welcher das Stellglied eine von der ersten Stellung abweichende zweite Stellung einnimmt, zum mechanischen Umkonfigurieren der kinematischen Struktur des Roboterarms umzuschalten.

Weiter bevorzugt weist der Roboterarm ein am Stellglied um eine fünfte Drehachse drehbar gelagerter Endeffektor und einen fünften Motor, der ausgebildet ist, den Endeffektor relativ zum Stellglied zu drehen. Alternativ zu der Anordnung der elektrischen Verbindervorrichtung am Stellgliedträger, kann weiter bevorzugt am Stellglied statt des Endeffektors die verlagerbar gelagerte elektrische Verbindervorrichtung angeordnet sein, wobei das Lagern insbesondere rückstellfähig erfolgt, bevorzugt zumindest um eine erste Linearrichtung verschiebbar und/oder eine fünfte Drehachse drehbar erfolgt. Der Begriff "rückstellfähig" umfasst insbesondere den Begriff "elastisch" oder vorwiegend elastisch, das heißt nicht vollständig plastisch. Die Rückstellfähigkeit kann beispielsweise durch elastomere Glieder erzeugt werden oder durch Federn, die die entsprechenden Freiheitsgrade aufweisen.

Weiter kann einen elektrische Steckverbinder Bestandteil der Verbindervorrichtung sein. Insbesondere kann dies ein männlicher oder weiblicher Steckverbinder sein. Des Weiteren kann zumindest eine elektrische Leitung eine elektrische Verbindung zwischen dem elektrischen Steckverbinder und dem Grundgestell oder einer elektrischen Stromquelle herstellen. Weiter bevorzugt kann eine Sensoreinrichtung vorgesehen sein, die am Stellglied oder am Stellgliedträger oder am Grundgestell oder an einem der Schwenkglieder oder an anderer Stelle angeordnet bzw. befestigt sein kann. Die Sensoreinrichtung kann insbesondere ausgelegt sein, den Endeffektor bzw. den Steckverbinder und deren Umgebung, beispielsweise im Umkreis von weniger als 10cm oder weniger als 20cm oder weniger als 50cm oder bevorzugt weniger als 1m zu erfassen. Insbesondere kann die Sensoreinrichtung auch ausgelegt sein, den komplementären Steckverbinder, insbesondere während des Steckvorgangs zu erfassen. Die Sensoreinrichtung kann bevorzugt eine optische Sensoreinrichtung, beispielsweise eine Kamera sein, insbesondere eine stereoskopische Kamera oder Tiefenbildkamera. Die Aufgabe des elektrischen Aufladens eines Kraftfahrzeugs kann durch einen erfindungsgemäß beschriebenen Roboterarm als Teil einer Ladevorrichtung gelöst werden, wobei die Ladevorrichtung bevorzugt weitere Elemente, wie beispielsweise eine Stromquelle und/oder Befestigungsmittel zum Befestigen an einer Wand oder einem Boden und/oder elektrische Leitungen und/oder ein Gehäuse und/oder Kommunikationsmittel zur drahtlosen oder drahtgebundenen Kommunikation mit einem Fahrzeug und/oder eine Steuerung des Roboterarms bzw. einer elektrischen Ladekontrolle, aufweisen kann.

Unter einem mechanischen Umkonfigurieren der kinematischen Struktur des Roboterarms wird im Rahmen dieser Erfindung verstanden, eine Änderung der geometrischen Gestalt eines Gliedes des Roboterarms, derart, dass zwei durch dieses Glied verbundene, benachbarte Gelenke durch eine solche Änderung eine andere relative Position und/oder Orientierung zu einander einnehmen, ohne dass eine solche Änderung durch die Motoren des Roboterarms erfolgt, welche Motoren zum automatischen und/oder manuellen Ändern der Gelenkstellungen des Roboterarms vorgesehen sind. Unter einem mechanischen Umkonfigurieren der kinematischen Struktur des Roboterarms wird im Rahmen dieser Erfindung somit nicht verstanden, das Ändern der Gelenkstellungen des Roboterarms durch Betreiben der Motoren des Roboterarms, welche die Pose des Roboterarms bestimmen, also die Summe aller Gelenkfreiheitsgrade des Roboterarms darstellen.

Durch den in vertikaler Richtung am Grundgestell verschiebbar gelagerten Schlitten wird ein Schubgelenk des Roboterarms geschaffen. Indem der Roboterarm neben diesem Schubgelenk und drei um eine vertikale Drehachse bewegbaren Drehgelenken außerdem noch ein viertes, um eine vertikale Drehachse bewegbares Drehgelenks aufweist, wird eine redundante SCARA-Roboterstruktur gebildet. Bei einer solchen redundanten SCARA-Roboterstruktur kann der Endeffektor in mehr als einer einzigen Gelenkstellungspose des Roboterarms dieselbe Position und Orientierung im Raum einnehmen, wodurch der Roboterarm u.a. sehr flexible positioniert werden kann. Indem ein so gebildeter redundanter SCARA-Roboterarm außerdem noch wenigstens eine erste Umschaltvorrichtung und eine zweite Umschaltvorrichtung aufweist, kann die Konfiguration dieses redundanten SCARA-Roboterarms zusätzlich verändert werden. Zwei Glieder des Roboterarms welche durch die erste Umschaltvorrichtung oder die zweite Umschaltvorrichtung verbunden sind und durch diese in ihren relativen Stellungen zueinander umkonfiguriert werden können, werden im Folgenden unter anderem auch als "Binärgelenke" oder "Binärachsen" bezeichnet, da sie genau zwei Zustände aufweisen können und für den Roboterarm betriebsfähige Zwischenstellungen nicht möglich sind. Die "Binärgelenke" oder "Binärachsen" stellen somit, anders ausgedrückt, mechanische, insbesondere bistabile Schalter dar, die zwei Schaltzustände aufweisen können.

Das Grundgestell und der daran linear verstellbare Schlitten können derart ausgebildet sein, dass der am Schlitten angebrachte Vorderarm des Roboterarms insbesondere von nahezu Bodenhöhe bis hinauf zu seiner Bauhöhe in der Höhe beliebig höhenverstellt werden kann. Das proximale Schwenkglied ist bauartbedingt näher an dem Grundgestell und dem Schlitten, d.h. näher an der durch das Grundgestell und dem Schlitten gebildeten Hubsäule des Roboterarms angeordnet, als das distale Schwenkgelenk, welches bauartbedingt ferner dem Grundgestell und dem Schlitten, d.h. ferner der durch das Grundgestell und dem Schlitten gebildeten Hubsäule des Roboterarms angeordnet ist, als das proximale Schwenkglied.

Der Stellgliedträger kann in einer ersten Ausführungsform ein Schubgelenkträger sein, und die erste Umschaltvorrichtung kann dabei ausgebildet sein, den Schubgelenkträger zwischen einer ersten Arretierungsschwenkstellung, in welcher der Schubgelenkträger als seine Stellung eine erste Orientierung einnimmt und einer zweiten Arretierungsschwenkstellung, in welcher der Schubgelenkträger eine von der ersten Orientierung abweichende zweite Orientierung einnimmt, zum mechanischen Umkonfigurieren der kinematischen Struktur des Roboterarms umzuschalten. Das Stellglied ist in diesem Fall ein am Schubgelenkträger verschiebbar gelagertes Schubglied, und die zweite Umschaltvorrichtung ist dabei ausgebildet, das Schubglied zwischen einer ersten Arretierungsschubstellung, in welcher das Schubglied als seine Stellung eine erste Position einnimmt und einer zweiten Arretierungsschubstellung, in welcher das Schubglied eine von der ersten Position abweichende zweite Position einnimmt, zum mechanischen Umkonfigurieren der kinematischen Struktur des Roboterarms umzuschalten.

Die erste Umschaltvorrichtung, die ausgebildet ist, den Schubgelenkträger zwischen der ersten Arretierungsschwenkstellung und der zweiten Arretierungsschwenkstellung umzuschalten, kann ein erstes Arretierungsmittel aufweisen, welches ausgebildet ist, den Schubgelenkträger in seiner erste Orientierung in einer vertikalen Orientierung zu halten, in der das Schubglied vertikal verstellbar bezüglich des Schubgelenkträgers verstellbar ist und ein zweites Arretierungsmittel aufweisen, welches ausgebildet ist, den Schubgelenkträger in seiner zweiten Orientierung in einer horizontalen Orientierung zu halten, in der das Schubglied horizontal verstellbar bezüglich des Schubgelenkträgers verstellbar ist.

Die zweite Umschaltvorrichtung, die ausgebildet ist, das Schubglied zwischen der ersten Arretierungsschubstellung und der zweiten Arretierungsschubstellung umzuschalten, kann ein drittes Arretierungsmittel aufweisen, welches ausgebildet ist, das Schubglied in seiner erste Position in einer bezüglich des Schubgelenkträgers eingefahrenen Position zu halten und ein viertes Arretierungsmittel aufweisen, welches ausgebildet ist, das Schubglied in seiner zweiten Position in einer bezüglich des Schubgelenkträgers ausgefahrenen Position zu halten.

Der Stellgliedträger kann in einer zweiten Ausführungsform statt eines Schubgelenkträgers ein Schwenkgelenkträger sein, wobei die erste Umschaltvorrichtung dabei ausgebildet sein kann, den Schwenkgelenkträger zwischen einer ersten Arretierungsschwenkstellung, in welcher der Schwenkgelenkträger als seine Stellung eine erste Orientierung einnimmt und einer zweiten Arretierungsschwenkstellung, in welcher der Schwenkgelenkträger eine von der ersten Orientierung abweichende zweite Orientierung einnimmt, zum mechanischen Umkonfigurieren der kinematischen Struktur des Roboterarms umzuschalten. Das Stellglied ist in diesem Fall ein am Schwenkgelenkträger drehbar gelagertes Schwenkglied, und die zweite Umschaltvorrichtung ist dabei ausgebildet, das Schwenkglied zwischen einer ersten Arretierungsschwenkstellung, in welcher das Schwenkglied als seine Stellung eine erste Orientierung einnimmt und einer zweiten Arretierungsschwenkstellung, in welcher das Schwenkglied eine von der ersten Orientierung abweichende zweite Orientierung einnimmt, zum mechanischen Umkonfigurieren der kinematischen Struktur des Roboterarms umzuschalten.

Die erste Umschaltvorrichtung kann in diesem Fall ausgebildet sein, den Schwenkgelenkträger zwischen der ersten Arretierungsschwenkstellung und der zweiten Arretierungsschwenkstellung umzuschalten, und kann ein erstes Arretierungsmittel aufweisen, welches ausgebildet ist, den Schwenkgelenkträger in seiner erste Orientierung in einer horizontalen Orientierung zu halten, in der das Schwenkglied drehbar bezüglich des Schwenkgelenkträgers verstellbar ist und kann außerdem ein zweites Arretierungsmittel aufweisen, welches ausgebildet ist, den Schwenkgelenkträger in seiner zweiten Orientierung in einer vertikalen Orientierung zu halten, in der das Schwenkglied schwenkbar bezüglich des Schwenkgelenkträgers verstellbar ist.

Die zweite Umschaltvorrichtung kann dabei ausgebildet sein, das Schwenkglied zwischen der ersten Arretierungsschwenkstellung und der zweiten Arretierungsschwenkstellung umzuschalten, und kann dazu ein drittes Arretierungsmittel aufweisen, welches ausgebildet ist, das Schwenkglied in seiner erste Orientierung in einer bezüglich des Schwenkgelenkträgers angeordneten Orientierung zu halten und kann dabei ein viertes Arretierungsmittel aufweisen, welches ausgebildet ist, das Schwenkglied in seiner zweiten Orientierung in einer bezüglich des Schwenkgelenkträgers umgeschwenkten Orientierung zu halten.

Die erste Umschaltvorrichtung kann in allen Ausführungsalternativen eine erste Antriebsvorrichtung aufweisen, die ausgebildet ist, den Schubgelenkträger oder den Schwenkgelenksträger in die erste Orientierung zu bringen und eine zweite Antriebsvorrichtung aufweisen, die ausgebildet ist, den Schubgelenkträger oder den Schwenkgelenksträger in die zweite Orientierung zu bringen.

Die zweite Umschaltvorrichtung kann in allen Ausführungsalternativen eine dritte Antriebsvorrichtung aufweisen, die ausgebildet ist, das Schubglied oder das Schwenkglied in die erste Position oder erste Orientierung zu bringen und eine vierte Antriebsvorrichtung aufweisen, die ausgebildet ist, das Schubglied oder das Schwenkglied in die zweite Position oder zweite Orientierung zu bringen.

Wenigstens eine von erster Antriebsvorrichtung, zweiter Antriebsvorrichtung, dritter Antriebsvorrichtung und vierter Antriebsvorrichtung kann generell wenigstens ein Stellmittel aus der Gruppe von elektro-magnetischem Stellmittel, hydraulischem Stellmittel, pneumatischem Stellmittel und/oder federelastischem Stellmittel aufweisen.

Im Drehmomenten-Übertragungsweg zwischen dem Schlitten und dem proximalen Schwenkglied kann eine erste Sicherheitskupplung angeordnet sein, die ausgebildet ist, eine drehmomentübertragende Verbindung von dem zweiten Motor auf das proximale Schwenkglied herzustellen, wenn das momentan übertragene Drehmoment ein der ersten Sicherheitskupplung zugeordnetes Schaltmoment unterschreitet und die drehmomentübertragende Verbindung von dem zweiten Motor auf das proximale Schwenkglied zu unterbrechen, wenn das momentan übertragene Drehmoment das der ersten Sicherheitskupplung zugeordnete Schaltmoment überschreitet.

Die erste Sicherheitskupplung kann eine erste Sperreinrichtung aufweisen, die ausgebildet ist, in Ihrem Sperrzustand die drehmomentübertragende Verbindung von dem zweiten Motor auf das proximale Schwenkglied auch dann aufrecht zu erhalten, wenn das momentan übertragene Drehmoment das der ersten Sicherheitskupplung zugeordnete Schaltmoment überschreitet.

Die erste Sicherheitskupplung kann eine erste Freilaufeinrichtung aufweisen, die ausgebildet ist, in Ihrem Freilaufzustand die drehmomentübertragende Verbindung von dem zweiten Motor auf das proximale Schwenkglied auch dann zu lösen, wenn das momentan übertragene Drehmoment das der ersten Sicherheitskupplung zugeordnete Schaltmoment unterschreitet.

Im Drehmomenten-Übertragungsweg zwischen dem proximalen Schwenkglied und dem Zwischenschwenkglied kann alternativ oder ergänzend zu der ersten Sicherheitskupplung eine zweite Sicherheitskupplung angeordnet sein, die ausgebildet ist, eine drehmomentübertragende Verbindung von dem dritten Motor auf das Zwischenschwenkglied herzustellen, wenn das momentan übertragene Drehmoment ein der zweiten Sicherheitskupplung zugeordnetes Schaltmoment unterschreitet und die drehmomentübertragende Verbindung von dem dritten Motor auf das Zwischenschwenkglied zu unterbrechen, wenn das momentan übertragene Drehmoment das der zweiten Sicherheitskupplung zugeordnete Schaltmoment überschreitet.

Die zweite Sicherheitskupplung kann eine zweite Sperreinrichtung aufweisen, die ausgebildet ist, in Ihrem Sperrzustand die drehmomentübertragende Verbindung von dem dritten Motor auf das Zwischenschwenkglied auch dann aufrecht zu erhalten, wenn das momentan übertragene Drehmoment das der zweiten Sicherheitskupplung zugeordnete Schaltmoment überschreitet.

Die zweite Sicherheitskupplung kann eine zweite Freilaufeinrichtung aufweisen, die ausgebildet ist, in Ihrem Freilaufzustand die drehmomentübertragende Verbindung von dem dritten Motor auf das Zwischenschwenkglied auch dann zu lösen, wenn das momentan übertragene Drehmoment das der zweiten Sicherheitskupplung zugeordnete Schaltmoment unterschreitet.

Insgesamt sind sowohl bei der ersten Sicherheitskupplung als auch bei der zweiten Sicherheitskupplung in einer speziellen Ausführungsform des Roboterarms genau drei Betriebszustände des Roboterarms möglich und zwar ein erster Betriebszustand, in dem die betreffenden Drehgelenke des Roboterarms (erste Drehachse und zweite Drehachse) stets starr an die jeweiligen Motoren (zweiter Motor und dritter Motor) drehmomentübertragend gekoppelt sind, ein zweiter Betriebszustand, in dem die betreffenden Drehgelenke des Roboterarms bei Erreichen und/oder Überschreiten eines Schaltmoments das betreffende Drehgelenk drehmomentenfrei schaltet, und ein dritter Betriebszustand, in dem die betreffenden Drehgelenke des Roboterarms stets drehmomentenfrei geschaltet sind. Der erste Betriebszustand kann insoweit als ein Leistungsmodus betrachtet werden, bei dem maximale Drehmomente zum Bewegen des Roboterarms eingeleitet werden können, jedoch keine Sicherung gegen unerwünschte Kollisionen erfolgt. Der zweite Betriebszustand kann insoweit als ein Sicherheitsmodus betrachtet werden, bei dem Drehmomente nur bis zu einer Höchstgrenze (dem Schaltmoment) übertragen werden können, die noch keine gravierenden Schäden erwarten lassen. Der dritte Betriebszustand kann insoweit als ein Teach-Modus oder als ein Verschiebemodus betrachtet werden, bei dem Drehmomente gar nicht übertragen werden können, sondern die betreffenden Drehgelenke des Roboterarms durch Anfassen und Bewegen mit den Händen einer Person manuell verstellt werden können, sei es zum Teachen von Roboterarmstellungen oder lediglich zum Beiseiteschieben des Roboterarms.

Ein Beispiel betrifft einen mobilen Roboter, aufweisend eine örtlich versetzbare Aufstellvorrichtung und einen an der Aufstellvorrichtung angeordneten Roboterarm nach einer oder mehreren Ausführungen, wie erfindungsgemäß beschrieben, wobei die Aufstellvorrichtung zum mobilen Tragen des Roboterarms ausgebildet ist und eine Ankoppelvorrichtung aufweist, die zum Ankoppeln eines fahrerlosen Transportfahrzeugs an die Aufstellvorrichtung ausgebildet ist, derart, dass der Roboterarm durch Bewegen des fahrerlosen Transportfahrzeugs von seiner Stelle bewegt und dadurch örtlich versetzt werden kann.

Unter einer örtlich versetzbaren Aufstellvorrichtung wird insbesondere eine Basis verstanden, welche den Roboterarm trägt und stabil auf einem Untergrund, wie einem Boden stehen kann und zwar derart, dass der Roboterarm bewegt und dessen Gelenke verstellt werden können, ohne dass der Roboterarm umfällt. Örtlich versetzbar bedeutet, dass der Roboterarm mittels der Aufstellvorrichtung wahlweise an verschiedenen Stellen des Untergrunds oder des Bodens positioniert, d.h. aufgestellt werden kann. Ein Versetzten kann dabei ein Fahren, Rollen, Schieben oder Gleiten der Aufstellvorrichtung von einem Ort zu einem anderen Ort sein. Ein Versetzten kann aber auch ein Anheben der Aufstellvorrichtung von einem Ort und ein Absetzen der Aufstellvorrichtung an einem anderen Ort mit umfassen. Die Mobilität des Roboterarms kann demgemäß insbesondere durch ein Fahren des Roboterarms oder ein Anheben und versetztes Absetzen des Roboterarms gegeben sein. Das fahrerlose Transportfahrzeug kann auch als autonomes Fahrzeug bezeichnet werden. Das fahrerlose Transportfahrzeug ist insbesondere ohne einen Personen-Führerstand ausgebildet.

Die Aufstellvorrichtung kann ein Gestell aufweisen, das Standfüße umfasst und eine Abstützeinrichtung aufweist, an der die Aufstellvorrichtung, insbesondere durch das fahrerlose Transportfahrzeug angehoben werden kann. Die Aufstellvorrichtung kann demgemäß in Art eines Tisches mit Standbeinen ausgeführt sein, wobei die Aufstellvorrichtung von dem fahrerlosen Transportfahrzeug unterfahren werden kann. Ist das fahrerlose Transportfahrzeug unter die Aufstellvorrichtung gefahren, kann durch eine entweder am fahrerlosen Transportfahrzeug vorgesehene Hubvorrichtung oder eine an der Aufstellvorrichtung vorgesehene Hubvorrichtung die Aufstellvorrichtung und somit auch der Roboterarm angehoben werden, derart, dass die Standfüße und/oder die Standbeinen vom Boden angehoben sind und die Aufstellvorrichtung und somit auch der Roboterarm weggefahren werden kann.

Die Aufstellvorrichtung kann jedoch alternativ oder ergänzend zu einer Ausführung mit Gestell und/oder Hubvorrichtung ein insbesondere eigenes Fahrwerk mit mehreren antriebslosen Rädern aufweisen, die zum rollenden Bewegen der Aufstellvorrichtung und somit zum rollenden Bewegen des Roboterarms von einer ersten örtlichen Stelle zu einer zweiten örtlichen Stelle ausgebildet sind. Die Aufstellvorrichtung und somit auch der Roboterarm kann demgemäß passiv auf dem Boden herumgeschoben werden. Ein derartiges Herumschieben kann beispielsweise durch manuelles Schieben durch eine Person erfolgen oder durch Ziehen und/oder Schieben mittels eines an die Aufstellvorrichtung angekoppelten fahrerlosen Transportfahrzeug, das insoweit ein Zugfahrzeug für die Aufstellvorrichtung bildet. Das fahrerlose Transportfahrzeug bildet dann mit der Aufstellvorrichtung insoweit ein Gespann.

Ein Beispiel betrifft ein Logistiksystem, aufweisend wenigstens einen Warenträger, der zum vorübergehenden Lagern von Waren ausgebildet ist, wenigstens ein fahrerloses Transportfahrzeug, das zum Transportieren des Warenträgers ausgebildet ist, und wenigstens einen mobilen Roboter nach einer oder mehreren Ausführungen, dessen Aufstellvorrichtung eine Ankoppelvorrichtung aufweist, die eine erste Ankoppeleinrichtung umfasst, die zum unmittelbaren mechanischen Ankoppeln des Warenträgers an die Aufstellvorrichtung ausgebildet ist und eine zweite Ankoppeleinrichtung umfasst, die zum unmittelbaren mechanischen Ankoppeln des den Warenträger tragenden Transportfahrzeugs an die Aufstellvorrichtung ausgebildet ist, derart, dass die Waren im Ankopplungszustand des Warenträgers mittels des Roboterarms von dem Warenträger entnommen und/oder auf den Warenträger aufgegeben werden können.

Die erste Ankoppeleinrichtung und die zweite Ankoppeleinrichtung können demgemäß zwei separate Ankoppeleinrichtungen sein. Alternativ können die erste Ankoppeleinrichtung und die zweite Ankoppeleinrichtung jedoch auch von einer gemeinsamen alleinigen Ankoppeleinrichtung gebildet werden. Die beiden Ankoppeleinrichtungen, ob separate oder kombinierte Ankoppeleinrichtungen bilden zusammen demgemäß die Ankoppelvorrichtung.

Der Warenträger kann von einer schrankartigen oder regalartigen Lagervorrichtung gebildet werden. Der Warenträger kann einen kastenförmigen Grundkörper aufweisen, der Ablageflächen, Tischflächen, Ablageböden und/oder Fachböden aufweist und insbesondere ein oder mehrere Regalfächer aufweisen kann.

Zum Transportieren des Warenträgers kann das fahrerlose Transportfahrzeug einen Tragboden aufweisen auf dem der Warenträger aufgestellt werden kann. Insbesondere kann der Warenträger Standfüße, Standbeine, Rollen und/oder Räder aufweisen und dadurch einen Spaltraum zwischen einem Unterboden des Warenträgers und eines Bodens oder einer Fahrbahn bilden, wodurch der Warenträger von dem fahrerlosen Transportfahrzeug unterfahren werden kann und der Warenträger durch das fahrerlose Transportfahrzeug, insbesondere durch eine Hubvorrichtung des fahrerlosen Transportfahrzeugs zum Transport des Warenträgers durch das fahrerlose Transportfahrzeug angehoben und fortbewegt werden kann.

Das Logistiksystem kann eine Robotersteuerung aufweisen, die ausgebildet ist, den ersten Motor, den zweiten Motor, den dritten Motor, den vierten Motor und den fünften Motor des Roboterarms gemäß eines Roboterprogramms anzusteuern, um den Endeffektor in seinen räumlichen Positionen und Orientierungen automatisch zu bewegen, wobei in der Robotersteuerung ein geometrisches Modell der Gestalt des Warenträgers, der wenigstens eine Ablagefläche aufweist, gespeichert ist, und die Robotersteuerung eingerichtet ist, den Endeffektor unter Berücksichtigung des geometrisches Modell der Gestalt des Warenträgers und der wenigstens einen Ablagefläche zu bewegen, derart, dass mittels des Endeffektors, der zum Greifen von Waren ausgebildet ist, die Waren im Ankopplungszustand des Warenträgers an der Aufstellvorrichtung mittels des Endeffektors von Ablageflächen des Warenträgers entnommen und/oder auf die Ablageflächen des Warenträgers aufgegeben werden können.

Anhand des geometrischen Modells des Warenträgers kann ein von der Robotersteuerung ausgeführtes Roboterprogramm mittels des Endeffektors des Roboterarms automatisch Waren von Ablageflächen des Warenträgers entnehmen und/oder auf die Ablageflächen des Warenträgers aufgeben. Aufgrund des Ankopplungszustands des Warenträgers an der Aufstellvorrichtung ist eine genau definierte relative Position und Orientierung des Warenträgers zu der Aufstellvorrichtung und folglich auch relativ zur Basis, d.h. zum Grundgestell des Roboterarms vorgegeben.

Das fahrerlose Transportfahrzeug kann wahlweise zum Bewegen eines von mehreren Warenträgern und/oder zum Bewegen eines von mehreren Roboterarmen verwendet werden.

Die Erfindung beschreibt, mitunter anders als bisher ausgedrückt, somit auch ein innovatives Gesamtkonzept. Das Robotersystem soll die Vorzüge einer SCARA-Roboterstruktur nutzen und außerdem ermöglichen, dass ein Gegenstand, wie beispielsweise eine Ware oder ein Paket um 90 Grad horizontal gekippt und verdreht abgelegt werden kann, dass der Gegenstand auch aus sehr engen und/oder vollen Regalen, u.a. auch von weit hinten entnommen werden kann, dass der Gegenstand abwechselnd von oben und von der Seite gegriffen werden, und dass der Gegenstand aus einer tiefen und/oder schmalen Kiste entnommen und/oder abgelegt werden kann.

Es wird unter anderem ein mobiles Robotersystem aufgezeigt, welches hochflexibel sein kann und vorzugsweise automatisch so konfiguriert werden kann, dass ein Gesamtsystem, das auch aus mehreren Robotereinheiten bestehen kann, möglichst effizient arbeiten kann.

Darüber hinaus soll das einzelne Robotersystem möglichst hoch performant sein, in einem vom Menschen abgetrennten Bereich arbeiten können, als auch über einen optionalen Modus verfügen, in dem eine sichere Kooperation oder Koexistenz von Mensch und Roboter möglich ist. Der Roboter kann zudem in einem weiteren Modus sehr leichtgängig und intuitiv von Hand geführt werden. Die einzelnen Roboterarme sollen einen möglichst großen Arbeitsbereich bei einer gleichzeitig minimalen Störkontur aufweisen und um Hindernisse, wie beispielsweise die Vertikalsäule, Regalelemente, andere Waren oder Kisten, herum greifen können.

Gelöst wird die Aufgabenstellung und Zielsetzung durch ein mehrelementiges Robotersystem, wie in den Ansprüchen beschrieben. Es kann insbesondere bedarfsgerecht rekonfiguriert werden. Das Logistiksystem besteht in einer Grundausführung aus drei Basiseinheiten. Die erste Basiseinheit umfasst eine Roboter-Einheit, d.h. einen Roboterarm. Der Roboterarm kann auf einer passiven, d.h. nicht angetrieben verfahrbaren mobiler Plattform angeordnet sein. Die mobile Plattform kann Rollen, Bremsen und/oder Fixiermöglichkeiten für die Gegenstände, wie beispielsweise Waren oder Pakete aufweisen. Die zweite Basiseinheit umfasst eine "Carrier-Einheit", d.h. einen Warenträger. Der Warenträger kann mittels einer autonomen mobilen Plattform, die Kopplungsmöglichkeiten aufweisen kann, bewegt werden. Die dritte Basiseinheit umfasst eine Transport-Einheit, d.h. ein fahrerloses Transportfahrzeug. Das fahrerlose Transportfahrzeug kann eine mobile Plattform mit Ablageflächen und Stauvolumen sein. Das fahrerlose Transportfahrzeug kann auch Werkzeuge, wie beispielsweise Greifer, Schrauber und/oder Vorrichtungen, wie Montagehilfen in der Produktion aufweisen. Das fahrerlose Transportfahrzeug kann vollständig passiv oder aktiv mobil und koppelbar sein.

Diese drei Basiseinheiten können frei miteinander kombiniert werden, um unterschiedliche Aufgabefelder abdecken zu können. In einer ersten Ausführungsvariante kann der mobile Roboterarm eigenständig an seinen Einsatzort fahren oder während der Fahrt Aufgaben ausführen. In einer zweiten Ausführungsvariante kann der mobile Roboterarm temporär stationär eingesetzt werden und eine Handhabungsausgabe lokal ausführen. In einer dritten Ausführungsvariante kann der mobile Roboterarm temporär stationär eingesetzt werden und eine Handhabungsausgabe lokal ausführen und dabei Gegenstände, wie Waren von einer Transporteinheit holen oder auf die Transporteinheit auflegen. In einer vierten Ausführungsvariante kann der mobile Roboterarm mit meinem mobilen autonomen Transportfahrzeug, beispielsweise in der Logistik, eine Anlieferung und einen Abtransport von Waren, Betriebsmitteln und/oder Werkzeugen durchführen.

Je nach Gesamtaufgabe und Einsatzbereich können die drei Basiseinheiten, d.h. der Roboterarm, das Fahrwerk (mobiler Roboter) und das fahrerlose Transportfahrzeug, in unterschiedlichen Anzahlen vorhanden sein und miteinander kombiniert werden.

Ein wesentlicher Aspekt liegt auf dem erfindungsgemäßen Roboterarm, welcher eine SCARA-Grundstruktur mit in der kinematischen Kette von einem Grundgestellt ausgehend eine erste vertikale Schubachse, wie beispielsweise eine Hubsäule, und folgend drei vertikale Drehachsen besitzt. Diese SCARA-Grundstruktur wird durch eine zusätzliche vertikale Drehachse zu einer kinematisch redundanten Roboterstruktur, d.h. Roboterkonfiguration, erweitert, sodass das bisherige Defizit der Beweglichkeit, beispielsweise einer durch ein Gabel-Lagerung reduzierten Gelenkbeweglichkeit, ausgeglichen wird und der Gesamtarbeitsraum des Roboterarms, auch um Hindernisse oder die Grundsäule herum, deutlich verbessert wird. Des Weiteren werden zwei binäre Zusatzachsen, d.h. schaltbare Zusatzachsen, wie Schaltglieder mit Umschaltvorrichtungen, in die kinematische Struktur integriert. Die Binärachsen ermöglichen das Umschalten in zwei Zustände bzw. zwei Gelenkstellungen und können sowohl als binäre Drehgelenke, als auch als binäre Schubgelenke ausgeführt werden. Durch solche Binärgelenke lassen sich insgesamt vier unterschiedliche Endeffektorposen, d.h. räumliche Positionen und Orientierungen eines Roboterflansches und/oder eines Robotergreifers, realisieren.

Eine erste Endeffektorpose bildet eine Grundstellung. Diese Pose kann für sämtliche dynamische Bewegungen der Roboterstruktur verwendet werden. Der Endeffektor besitzt dabei eine möglich geringe Massenträgheit und eine stabile Abstützung in den Führungslagern der beiden Binärgelenke. Beide Gelenke, insbesondere jedoch das Schubgelenk, wird in beiden Endstellungen, insbesondere jedoch in dieser Grundpose, stabil gegen einen Anschlag gedrückt und zusätzlich seitlich mittels beispielsweise einer kurzen Schiene oder zwei Führungsstiften am Ende oder in der Nähe der Grundpose vorteilshaft in Bezug auf Querbelastungen und Kippmomente fixiert.

Eine zweite Endeffektorpose bildet eine untere Stellung. Diese Pose kann genutzt werden, um bspw. von oben in tiefe Kisten zu greifen, ohne dass Roboterkomponenten, insbesondere die Roboterstruktur mit dem Kistenrand kollidieren. Hier wird das lineare Binärgelenk vollständig z.B. gegen einen Endanschlag ausgefahren.

Eine dritte Endeffektorpose bildet eine seitliche Stellung. In dieser Pose können Waren aus einem Regal oder in ein Regal geräumt werden. Hierzu wird das rotatorische Binärgelenk z.B. gegen einen Endanschlag geschwenkt.

Eine vierte Endeffektorpose bildet eine seitlich ausgefahrene Stellung. In dieser Pose können Waren aus einem sehr schmalen Regal geräumt werden oder in ein sehr schmales Regal geräumt werden. Auch tiefer liegende Regalbereiche können problemlos erreicht werden, ohne dass Roboterkomponenten, insbesondere die Roboterstruktur mit dem Regal kollidieren. Hierzu wird das rotatorische Binärgelenk geschwenkt, sowie das lineare Binärgelenk ausgefahren.

Binärgelenke, d.h. Gelenke mit einer Umschaltvorrichtung besitzen auf Grund des deutlich einfacheren Aufbaus gegenüber klassischen servo-angetriebenen Gelenken einige Vorteile, die sich vor allem insbesondere im Komponentengewicht, im Bauraum und in den Kosten widerspiegeln. Binärgelenke können beispielsweise beidseitig im Sinne von Agonist und Antagonist bewegt oder einseitig passiv z.B. über Federn rückgestellt werden. Die Antriebe können hierbei insbesondere elektro-magnetisch, hydraulisch und/oder pneumatisch eine Antriebskraft erzeugen. Dabei wird das Gelenk stets über den vollständigen Gelenkwinkel bzw. die vollständige Hubstrecke bewegt und an den Gelenkgrenzen gegen einen Endanschlag gedrückt. Dieser Zustand kann, falls gewünscht, durch entsprechende Taster, Aufnehmer und/oder Sensoren erfasst werden. Kostenintensive Positionssensoren sind nicht nötig, da keine Zwischenzustände erkannt werden müssen. Des Weiteren können alternativ oder ergänzend für die binären Gelenksbewegungen auch Vorrichtungen eingesetzt werden, die aus Formgedächtnis-Legierungen, wie beispielsweise Nickel-Titan (NiTi)-Legierungen, bestehen. Diese Vorrichtungen sind extrem leicht und äußerst kostengünstig und können je nach elektrischer Bestromung d.h. je nach Temperatur unterschiedliche Formen und Ausprägungen annehmen.

Eine proximale Antriebsverteilung, d.h. eine Anordnung der Motoren an Gliedern, die sich in der kinematischen Kette möglichst nahe an dem Grundgestell des Roboterarms befinden, reduziert die bewegte Masse des Roboterarms zusätzlich. Hierbei können Servomotoren und ggf. Getriebe der ersten Drehachse und der zweiten Drehachse, d.h. der zweite Motor und der dritte Motor, an dem Schlitten angeordnet sein. Die Servomotoren und ggf. Getriebe der ersten Drehachse und der zweiten Drehachse können dabei kollinear platziert sein. Die Bewegungsübertragung des dritten Motors auf das Zwischenschwenkglied erfolgt beispielsweise über einen Riemen. Ein vierter Motor kann aus Bauraumgründen leicht versetzt neben dem zweiten Motor positioniert, an dem proximalen Schwenkglied angeordnet sein. Hier erfolgt die Übertragung der vorzugsweise nicht übersetzten Antriebsbewegung über das Zwischenschwenkglied hinweg oder durch das Zwischenschwenkglied hindurch mittels zweier Riementriebe auf distale Schwenkglied. Die in der kinematischen Kette nachfolgenden beiden Achsen sind binär umschaltbar und somit vergleichsweise einfach und/oder leicht aufgebaut. Die letzte Achse, die auch eine Drehachse ist, kann direkt bzw. über einen exzentrisch angeordneten kleinen Motor ggf. mit Riementrieb angetrieben werden. Diese Antriebsverteilung konzentriert die meiste Masse der Antriebseinheiten, d.h. der Motoren in die Nähe der Hubsäule, d.h. des Grundgestells und/oder des Schlittens, sodass deren Massenträgheit gering gehalten werden kann.

Ein ergänzendes Sicherheitskonzept kann vorsehen, über drucksensitive Tastelemente und Schaltleisten, drohende Quetschungen zwischen den Robotergliedern zu detektieren, daraufhin das System abzubremsen und die kritischen Gelenke entgegengesetzt leicht zurückzufahren. Grundlegende Scherstellen, wie bei Kinematikstrukturen von Roboterarmen mit geschichteten Gliedern sind hier nicht vorhanden. Darüber kann das Robotersystem in den rotatorisch wirkenden Achsen Sicherheitskupplungen aufweisen, die den Kraftfluss zwischen Antrieb und Abtrieb (d.h. nachfolgendes Strukturelement bzw. Riemenscheiben) definiert, reproduzierbar und mechanisch beim Erreichen einen Schwellwerts sicher trennen. Dies reduziert im dynamischen Kollisionsfall die reflektierte Masse, da die durch die Antriebe verursachte feste Bindung zwischen den Robotergliedern unmittelbar aufgehoben wird. Zudem wird verhindert, dass Personen oder Gegenstände zwischen Roboter und Umgebung eingeklemmt werden können. Obwohl der Roboterarm insgesamt fünf vollwertige aktive und zwei zusätzliche binäre Antriebe besitzt, ist es ausreichend lediglich die erste Drehachse und die zweite Drehachse freizuschalten damit dieser Kollisionsschutz erreicht werden kann. Der Endeffektor ist in diesem Fall auf der gesamten Ebene des Roboterarms in zwei Freiheitsgraden frei beweglich und kann manuell gegen einen definierten Widerstand weggeschoben werden. Diese mechanische Leistungsbegrenzung erfordert keine aufwendige steuerungstechnische Verarbeitung von Sensorsignalen, die mit Verzögerungszeiten einhergehen. Sie ist jederzeit direkt einsatzbereit und sicher. Die Einstellung des Grenzantriebsmoments kann über eine Justierung der Kupplungsmechanik erfolgen.

Wie beschrieben, begrenzen die Sicherheitskupplungen die Leistung des Roboterarms auf ein Mensch-Roboter-Kollaborations(MRK)-fähiges Level, bei dem der Roboterarm mit reduzierter Geschwindigkeit bei einem Menschen oder mit einem Menschen zusammenarbeiten soll. Sind zusätzliche Schutzeinrichtungen, wie Zugangsbeschränkungen usw. aktiv und halten diese Personen vom Roboter fern, so können die Sicherheitskupplungen umgeschaltet werden. Dies kann mechanisch manuell oder elektrisch ausgelöst (z.B. über einen Elektro-Magneten oder ein Formgedächtniselement) erfolgen. In diesem sogenannten Leistungsmodus, wird das volle Antriebsmoment ohne Limitierung auf die Roboterstruktur übertragen. Der Roboterarm kann jetzt hochperformant arbeiten.

Der jeweilige Zustand des Roboterarms kann von außen, z.B. über eine entsprechende Signalbeleuchtung oder farbige Elemente, angezeigt werden und dadurch gut zu erkennen sein. Der jeweilige Zustand kann intern über Sicherheitstaster abgefragt und an die Steuerung übertragen werden.

Als zusätzlich möglicher Modus kann ein Handführmodus ausgewählt werden. Dieser schaltet die Sicherheitskupplungen komplett frei, d.h. dies entspricht ein auf Null Nm gesetztes Grenzantriebsmoment. Damit kann der Roboterarm in der Ebene vollständig kraftfrei durch den Nutzer geführt werden. Eine ggf. zusätzliche, abtriebsseitige Positionssensorik der Antriebe zeichnet dabei im Sinne eines Teachens die gesamte Bewegung oder nur einzelne Armstellungen auf.

Somit können die beschriebenen Sicherheitskupplungen beispielsweise in drei Modi umgeschaltet werden. Ein erster Modus entspricht einem Leistungsmodus. Hier wird ein Durchrutschen durch ein entsprechend platziertes formschlüssiges Sperrelement verhindert. Der Antriebsstrang verhält sich wie ein gewöhnlicher Antriebstrang eines Roboters. Ein zweiter Modus entspricht einem MRK-Modus. Hier wird ein gezieltes Durchrutschen bei einem vorher definierten Antriebsmoment erzeugt. Der Antriebsstrang verhält sich bis zu diesem Grenzmoment wie ein gewöhnlicher Antriebstrang. Darüber hinaus wird das übertragbare Moment auf dieses begrenzt. Ein dritter Modus entspricht einem Teach-Modus. Hier werden die Kupplungselemente direkt getrennt, sodass kein Moment übertragen wird. Das betreffende Gelenk ist somit komplett frei geschaltet und kann reibungsfrei oder reibungsarm von außen bewegt werden.

Zusammenfassend wird mit der Erfindung ein innovatives Konzept eines rekonfigurierbaren mobilen Robotersystems beschrieben, dass aus den Grundmodulen Robotereinheit, "Carrier-Einheit" und Transporteinheit besteht, welche beliebig miteinander kombiniert werden können. Die Robotereinheit besitzt eine neuartige siebenachsige Struktur auf SCARA-Basis. Diese sind ideal für logistische Anwendungen geeignet. Sie ist kinematisch einfach redundant ausgeführt und besitzt zwei zusätzliche, binär aktuierte Gelenke. Diese sind jeweils in zwei Stellungen umschaltbar, sodass auf einfache Weise insgesamt vier Endeffektorstellungen realisiert werden können. Die Stellungen ermöglichen neben einfachen Greifsituationen von oben und von der Seite, auch unter anderem den Griff in eine tiefe Kiste, sowie in ein schmales tiefes Regal. Zwei schaltbare mechanische Sicherheitskupplungen in der ersten Drehachse und der zweiten Drehachse begrenzen bei Bedarf die Leistungsfähigkeit und minimieren das Verletzungsrisiko durch den Roboterarm in der Arbeit mit Menschen.

Ausführungsbeispiele der Erfindung sind exemplarisch in den beigefügten schematischen Zeichnungen dargestellt. Konkrete Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung innerhalb des Schutzbereichs der beigefügten Ansprüche darstellen.

Es zeigen:
- Fig. 1: eine Seitenansicht einer ersten Ausführungsform eines erfindungsgemäßen Roboterarms in einer ersten Konfiguration,
- Fig. 2: eine Seitenansicht der ersten Ausführungsform des erfindungsgemäßen Roboterarms gemäß Fig. 1 in einer zweiten Konfiguration,
- Fig. 3: eine Seitenansicht der ersten Ausführungsform des erfindungsgemäßen Roboterarms gemäß Fig. 1 in einer dritten Konfiguration,
- Fig. 4: eine Seitenansicht der ersten Ausführungsform des erfindungsgemäßen Roboterarms gemäß Fig. 1 in einer vierten Konfiguration,
- Fig. 5: eine Seitenansicht einer zweiten Ausführungsform eines erfindungsgemäßen Roboterarms in einer ersten Konfiguration,
- Fig. 6: eine Seitenansicht der zweiten Ausführungsform des erfindungsgemäßen Roboterarms gemäß Fig. 5 in einer zweiten Konfiguration,
- Fig. 7: eine Seitenansicht der zweiten Ausführungsform des erfindungsgemäßen Roboterarms gemäß Fig. 5 in einer dritten Konfiguration,
- Fig. 8: eine Seitenansicht der zweiten Ausführungsform des erfindungsgemäßen Roboterarms gemäß Fig. 5 in einer vierten Konfiguration,
- Fig. 9: ein beispielhaftes erstes Szenario des De-Kommissionierens und des Vorsortierens,
- Fig. 10: ein beispielhaftes zweites Szenario des Einräumens und Ausräumens von Waren,
- Fig. 11: ein beispielhaftes drittes Szenario einer Verräum-Unterstützung,
- Fig. 12: ein beispielhaftes viertes Szenario der Sortierung von Warenrückläufern,
- Fig. 13: eine Ladevorrichtung in Ruheposition,
- Fig. 14: die Ladevorrichtung aus Figur 13 in Arbeitsposition,
- Fig. 15: den Stellgliedträger mit Sensoreinrichtung,
- Fig. 16: den Stellgliedträger mit Sensoreinrichtung,
- Fig. 17: den Stellgliedträger aus Figur 15 in einer anderen Perspektive,
- Fig. 18: die Ladevorrichtung in Arbeitsposition mit einem angeschlossenen Kraftfahrzeug,
- Fig. 19: die Ladevorrichtung in einer Garage,
- Fig. 20: die Ladevorrichtung in einer Garage, und
- Fig. 21: die Ladevorrichtung in einer Garage.

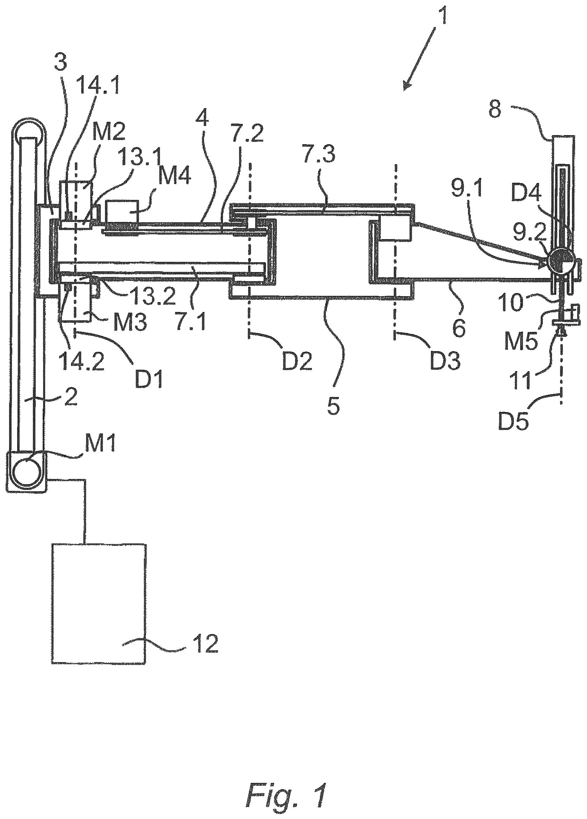

Die Fig. 1 bis Fig. 4 zeigt eine erste beispielhafte Ausführungsform eines erfindungsgemäßen Roboterarms 1. Der Roboterarm 1 weist im Falle des vorliegenden Ausführungsbeispiels ein Grundgestell 2 auf. An dem Grundgestell 2 ist in einer vertikalen Richtung verschiebbar ein Schlitten 3 gelagert. Der Roboterarm 1 weist einen ersten Motor M1 auf, der ausgebildet ist, den Schlitten 3 relativ zum Grundgestell 2 in seiner Höhenlage zu verstellen, wie dies durch den Doppelpfeil am Schlitten 3 aufgezeigt ist.

Am Schlitten 3 ist um eine vertikale erste Drehachse D1 schwenkbar ein proximales Schwenkglied 4 gelagert. Der Roboterarm 1 weist einen zweiten Motor M2 auf, der ausgebildet ist, das proximale Schwenkglied 4 relativ zum Schlitten 3 zu schwenken. Am proximalen Schwenkglied 4 ist um eine vertikale zweite Drehachse D2 schwenkbar ein Zwischenschwenkglied 5 gelagert. Der Roboterarm 1 weist einen dritten Motor M3 auf, der ausgebildet ist, das Zwischenschwenkglied 5 relativ zum proximalen Schwenkglied 4 zu schwenken. Am Zwischenschwenkglied 5 ist um eine vertikale dritte Drehachse D3 schwenkbar ein distales Schwenkglied 6 gelagert. Der Roboterarm 1 weist einen vierten Motor M4 auf, der ausgebildet ist, das distale Schwenkglied 6 relativ zum Zwischenschwenkglied 5 zu schwenken. Der am Schlitten 3 angeordnete dritte Motor M3 ist mittels eines ersten Riemens 7.1 an das Zwischenschwenkglied 5 gekoppelt. Der am proximalen Schwenkglied 4 angeordnete vierte Motor M4 ist über einen zweiten Riemens 7.2 und einen dritten Riemen 7.3 mit dem distalen Schwenkglied 6 gekoppelt.

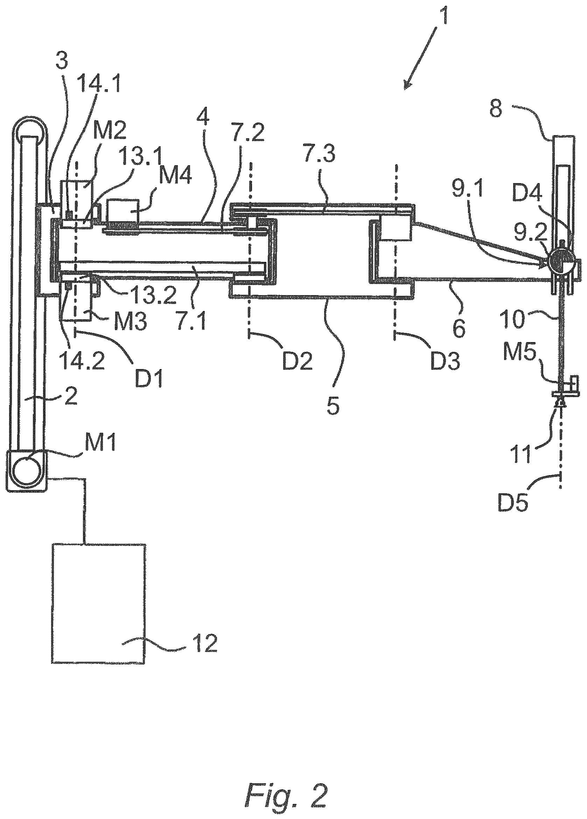

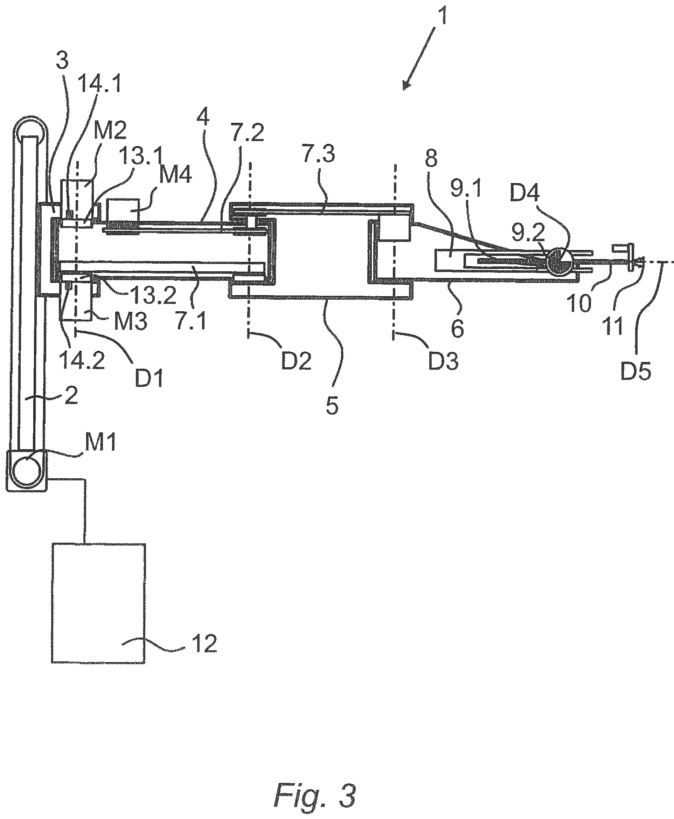

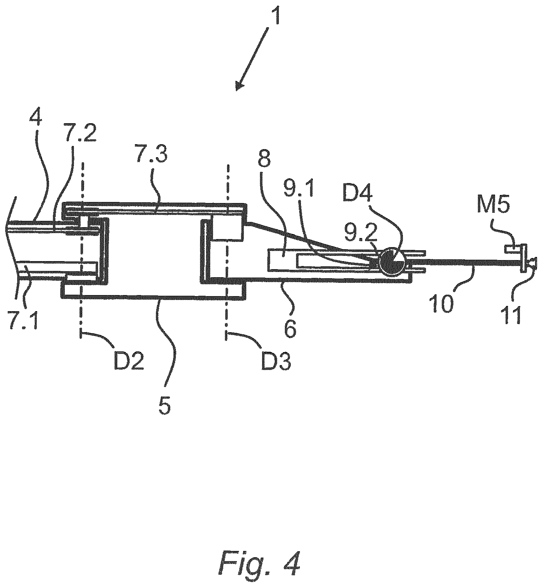

Der Roboterarm 1 weist einen am distalen Schwenkglied 6 um eine horizontale vierte Drehachse D4 drehbar gelagerten Schubgelenkträger 8a auf. Der Roboterarm 1 weist außerdem eine erste Umschaltvorrichtung 9.1 auf, die ausgebildet ist, den Schubgelenkträger 8a zwischen einer ersten Arretierungsschwenkstellung, in welcher der Schubgelenkträger 8a eine erste Orientierung, wie in Fig. 1 und Fig. 2 gezeigt eine vertikale Orientierung, einnimmt und einer zweiten Arretierungsschwenkstellung, in welcher der Schubgelenkträger 8a eine von der ersten Orientierung abweichende zweite Orientierung, wie in Fig. 3 und Fig. 4 gezeigt eine horizontale Orientierung, einnimmt, zum Umkonfigurieren des Roboterarms 1 umzuschalten. Jede der Figuren 1 bis 4 zeigt den Roboterarm 1 in einer anderen Konfiguration des Roboterarms 1.

Ein Schubglied 10a des Roboterarms 1 ist am Schubgelenkträger 8a verschiebbar gelagert. Der Roboterarm 1 weist außerdem eine zweite Umschaltvorrichtung 9.2 auf, die ausgebildet ist, das Schubglied 10a zwischen einer ersten Arretierungsschubstellung, in welcher das Schubglied 10a eine erste Position, wie in Fig. 1 und Fig. 3 gezeigt eine eingefahrene Position, einnimmt und einer zweiten Arretierungsschubstellung, in welcher das Schubglied 10a eine von der ersten Position abweichende zweite Position, wie in Fig. 2 und Fig. 4 gezeigt eine ausgefahrene Position, einnimmt, zum Umkonfigurieren des Roboterarms 1 umzuschalten. Jede der Figuren 1 bis 4 zeigt den Roboterarm 1 in einer anderen Konfiguration des Roboterarms 1.

Ergänzend ist ein Endeffektor 11 am Schubglied 10a um eine fünfte Drehachse D5 drehbar gelagert. Der Roboterarm 1 weist dazu einen fünften Motor M5 auf, der ausgebildet ist, den Endeffektor 11 relativ zum Schubglied 10a zu drehen. Die Motoren M1 bis M5 werden durch eine Robotersteuerung 12 gemäß eines Roboterprogramms automatisch oder in einem Handfahrbetrieb manuell angesteuert.

Die erste Umschaltvorrichtung 9.1 ist ausgebildet, den Schubgelenkträger 8a zwischen der ersten Arretierungsschwenkstellung und der zweiten Arretierungsschwenkstellung umzuschalten, und umfasst dazu ein erstes Arretierungsmittel, welches ausgebildet ist, den Schubgelenkträger 8a in seiner ersten Orientierung in einer vertikalen Orientierung zu halten, in der das Schubglied 10a vertikal verstellbar bezüglich des Schubgelenkträgers 8a verstellbar ist, wie dies insbesondere in Fig. 1 und Fig. 2 dargestellt ist, und ein zweites Arretierungsmittel, welche ausgebildet ist, den Schubgelenkträger 8a in seiner zweiten Orientierung in einer horizontalen Orientierung zu halten, in der das Schubglied 10a horizontal verstellbar bezüglich des Schubgelenkträgers 8a verstellbar ist, wie dies insbesondere in Fig. 3 und Fig. 4 dargestellt ist.

Die zweite Umschaltvorrichtung 9.2 ist ausgebildet, das Schubglied 10a zwischen der ersten Arretierungsschubstellung und der zweiten Arretierungsschubstellung umzuschalten, und umfasst dazu ein drittes Arretierungsmittel, welche ausgebildet ist, das Schubglied in seiner erste Position in einer bezüglich des Schubgelenkträgers eingefahrenen Position zu halten und ein viertes Arretierungsmittel, welche ausgebildet ist, das Schubglied 10a in seiner zweiten Position in einer bezüglich des Schubgelenkträgers 8ausgefahrenen Position zu halten, wie dies insbesondere in Fig. 2 und Fig. 4 dargestellt ist.

Die erste Umschaltvorrichtung weist im Falle des vorliegenden Ausführungsbeispiels eine erste Antriebsvorrichtung auf, die ausgebildet ist, den Schubgelenkträger 8a in die erste Orientierung zu bringen und weist eine zweite Antriebsvorrichtung auf, die ausgebildet ist, den Schubgelenkträger 8a in die zweite Orientierung zu bringen.

Die zweite Umschaltvorrichtung weist im Falle des vorliegenden Ausführungsbeispiels eine dritte Antriebsvorrichtung auf, die ausgebildet ist, das Schubglied 10a in die erste Position zu bringen und weist eine vierte Antriebsvorrichtung aufweist, die ausgebildet ist, das Schubglied 10a in die zweite Position zu bringen.

Im Drehmomenten-Übertragungsweg zwischen dem Schlitten 3 und dem proximalen Schwenkglied 4 ist außerdem eine erste Sicherheitskupplung 13.1 angeordnet, die ausgebildet ist, eine drehmomentübertragende Verbindung von dem zweiten Motor M2 auf das proximale Schwenkglied 4 herzustellen, wenn das momentan übertragene Drehmoment ein der ersten Sicherheitskupplung 13.1 zugeordnetes Schaltmoment unterschreitet und die drehmomentübertragende Verbindung von dem zweiten Motor M2 auf das proximale Schwenkglied 4 zu unterbrechen, wenn das momentan übertragene Drehmoment das der ersten Sicherheitskupplung 13.1 zugeordnete Schaltmoment überschreitet.

Die erste Sicherheitskupplung 13.1 weist außerdem eine erste Sperreinrichtung 14.1 auf, die ausgebildet ist, in Ihrem Sperrzustand die drehmomentübertragende Verbindung von dem zweiten Motor M2 auf das proximale Schwenkglied 4 auch dann aufrecht zu erhalten, wenn das momentan übertragene Drehmoment das der ersten Sicherheitskupplung 13.1 zugeordnete Schaltmoment überschreitet.

Im Drehmomenten-Übertragungsweg zwischen dem proximalen Schwenkglied 4 und dem Zwischenschwenkglied 5 kann eine zweite Sicherheitskupplung 13.2 angeordnet sein, die ausgebildet ist, eine drehmomentübertragende Verbindung von dem dritten Motor M3 auf das Zwischenschwenkglied 5 herzustellen, wenn das momentan übertragene Drehmoment ein der zweiten Sicherheitskupplung 13.2 zugeordnetes Schaltmoment unterschreitet und die drehmomentübertragende Verbindung von dem dritten Motor M3 auf das Zwischenschwenkglied 5 zu unterbrechen, wenn das momentan übertragene Drehmoment das der zweiten Sicherheitskupplung 13.2 zugeordnete Schaltmoment überschreitet.

Die zweite Sicherheitskupplung 13.2 weist außerdem eine zweite Sperreinrichtung 14.2 auf, die ausgebildet ist, in Ihrem Sperrzustand die drehmomentübertragende Verbindung von dem dritten Motor M3 auf das Zwischenschwenkglied 5 auch dann aufrecht zu erhalten, wenn das momentan übertragene Drehmoment das der zweiten Sicherheitskupplung 13.2 zugeordnete Schaltmoment überschreitet.

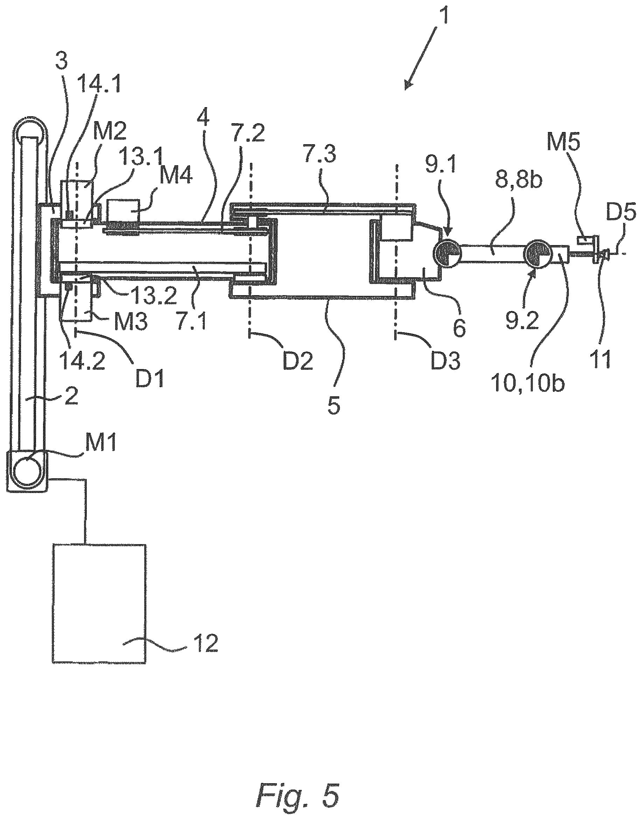

Die Fig. 5 bis Fig. 8 zeigt eine zweite beispielhafte Ausführungsform eines erfindungsgemäßen Roboterarms 1.

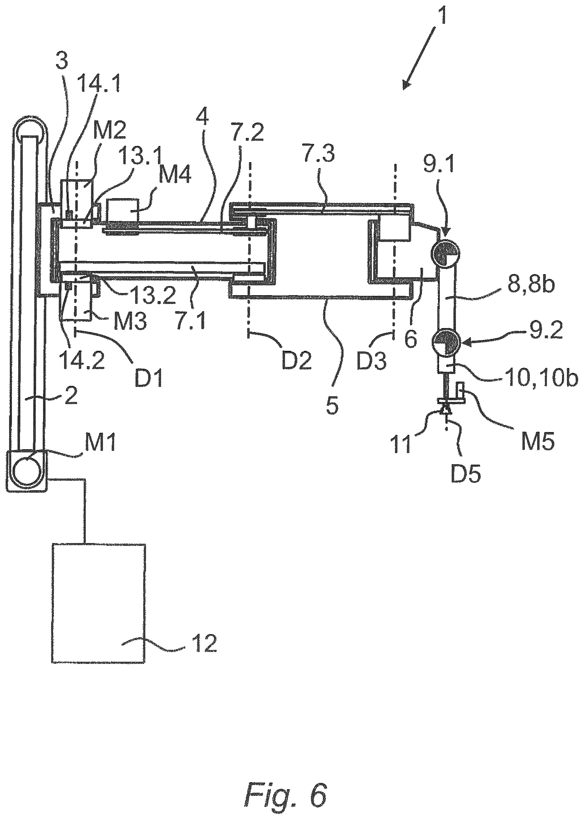

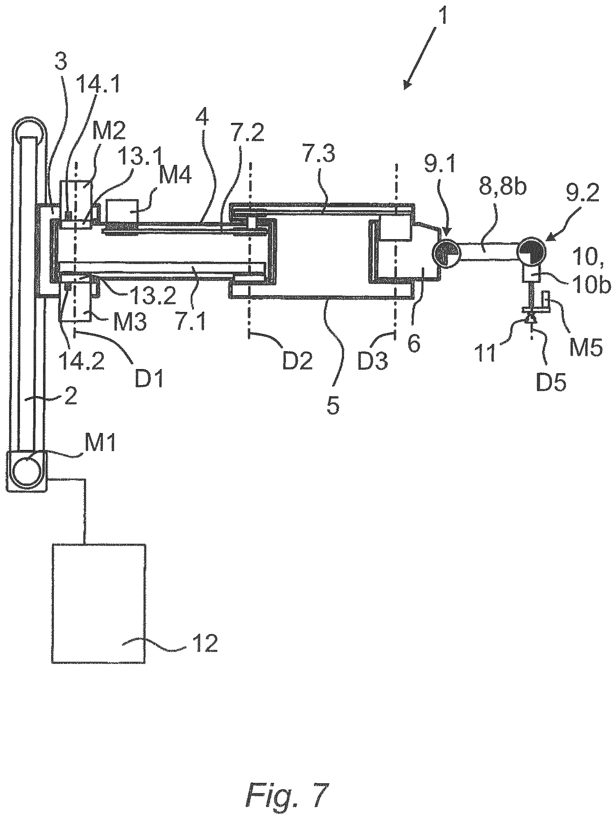

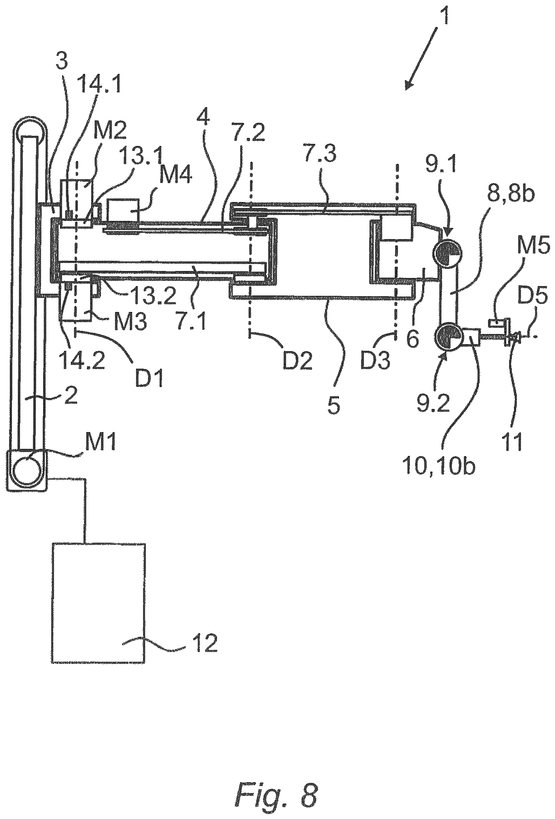

Der Stellgliedträger 8 ist in dieser zweiten Ausführungsform ein Schwenkgelenkträger 8b, und die erste Umschaltvorrichtung 9.1 ist dabei ausgebildet, den Schwenkgelenkträger 8b zwischen einer ersten Arretierungsschwenkstellung (Fig. 5 und Fig. 7), in welcher der Schwenkgelenkträger 8b als seine Stellung eine erste (horizontale) Orientierung einnimmt und einer zweiten Arretierungsschwenkstellung (Fig. 6 und Fig. 8), in welcher der Schwenkgelenkträger 8b eine von der ersten Orientierung abweichende zweite (vertikale) Orientierung einnimmt, zum mechanischen Umkonfigurieren der kinematischen Struktur des Roboterarms 1 umzuschalten. Das Stellglied 10 ist in diesem Fall ein am Schwenkgelenkträger 8b drehbar gelagertes Schwenkglied 10b, und die zweite Umschaltvorrichtung 9.2 ist dabei ausgebildet, das Schwenkglied 10b zwischen einer ersten Arretierungsschwenkstellung (Fig.5 und Fig.6), in welcher das Schwenkglied 10b als seine Stellung eine erste Orientierung einnimmt, wobei die erste Orientierung dadurch gekennzeichnet ist, dass das Schwenkglied 10b mit seiner Längserstreckung in dieselbe Richtung ausgerichtet ist, wie die Längserstreckung des Schwenkgelenkträgers 8b, und einer zweiten Arretierungsschwenkstellung (Fig.7 und Fig.8), in welcher das Schwenkglied 10b eine von der ersten Orientierung abweichende zweite Orientierung einnimmt, wobei die zweite Orientierung dadurch gekennzeichnet ist, dass das Schwenkglied 10b mit seiner Längserstreckung in einem rechten Winkel zur Längserstreckung des Schwenkgelenkträgers 8b ausgerichtet ist, zum mechanischen Umkonfigurieren der kinematischen Struktur des Roboterarms 1 umzuschalten.

Die erste Umschaltvorrichtung 9.1 ist in diesem Fall ausgebildet, den Schwenkgelenkträger 8b zwischen der ersten Arretierungsschwenkstellung (Fig.5 und Fig.7) und der zweiten Arretierungsschwenkstellung (Fig.6 und Fig.8) umzuschalten, und weist ein erstes Arretierungsmittel auf, welches ausgebildet ist, den Schwenkgelenkträger 8b in seiner erste Orientierung in einer horizontalen Orientierung zu halten, in der das Schwenkglied 10b drehbar bezüglich des Schwenkgelenkträgers 8b verstellbar ist und weist außerdem ein zweites Arretierungsmittel auf, welches ausgebildet ist, den Schwenkgelenkträger 8b in seiner zweiten Orientierung in einer vertikalen Orientierung zu halten, in der das Schwenkglied 10b schwenkbar bezüglich des Schwenkgelenkträgers 8b verstellbar ist.

Die zweite Umschaltvorrichtung 9.2 ist ausgebildet, das Schwenkglied 10b zwischen der ersten Arretierungsschwenkstellung (Fig. 5 und Fig. 6) und der zweiten Arretierungsschwenkstellung (Fig. 7 und Fig. 8) umzuschalten, und weist ein drittes Arretierungsmittel auf, welches ausgebildet ist, das Schwenkglied 10b in seiner erste Orientierung in einer bezüglich des Schwenkgelenkträgers 8b angeordneten Orientierung zu halten, in der das Schwenkglied 10b mit seiner Längserstreckung in dieselbe Richtung ausgerichtet ist, wie die Längserstreckung des Schwenkgelenkträgers 8b, und weist ein viertes Arretierungsmittel auf, welches ausgebildet ist, das Schwenkglied 10b in seiner zweiten Orientierung in einer bezüglich des Schwenkgelenkträgers 8b umgeschwenkten Orientierung zu halten, in der das Schwenkglied 10b mit seiner Längserstreckung in einem rechten Winkel zur Längserstreckung des Schwenkgelenkträgers 8b ausgerichtet ist

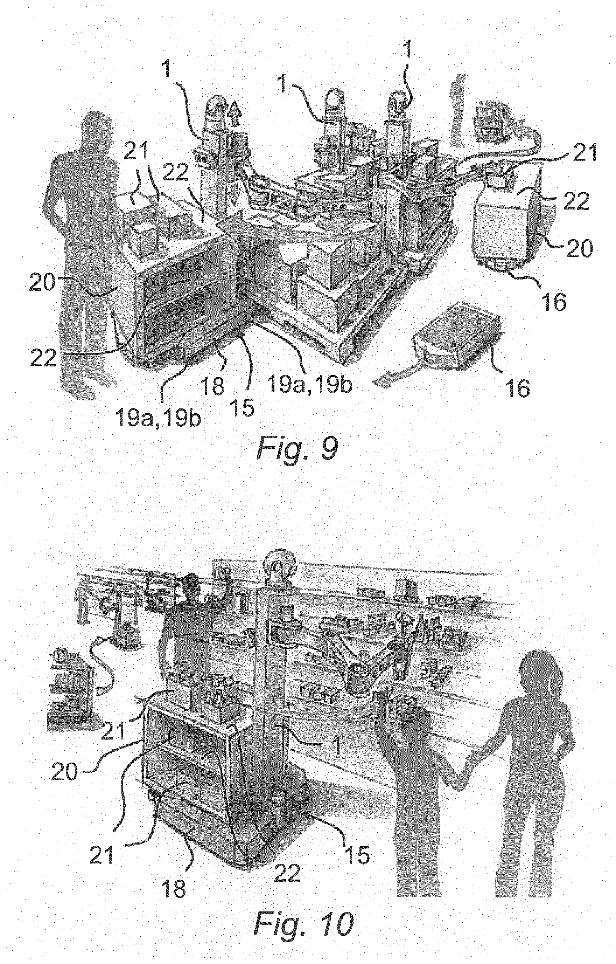

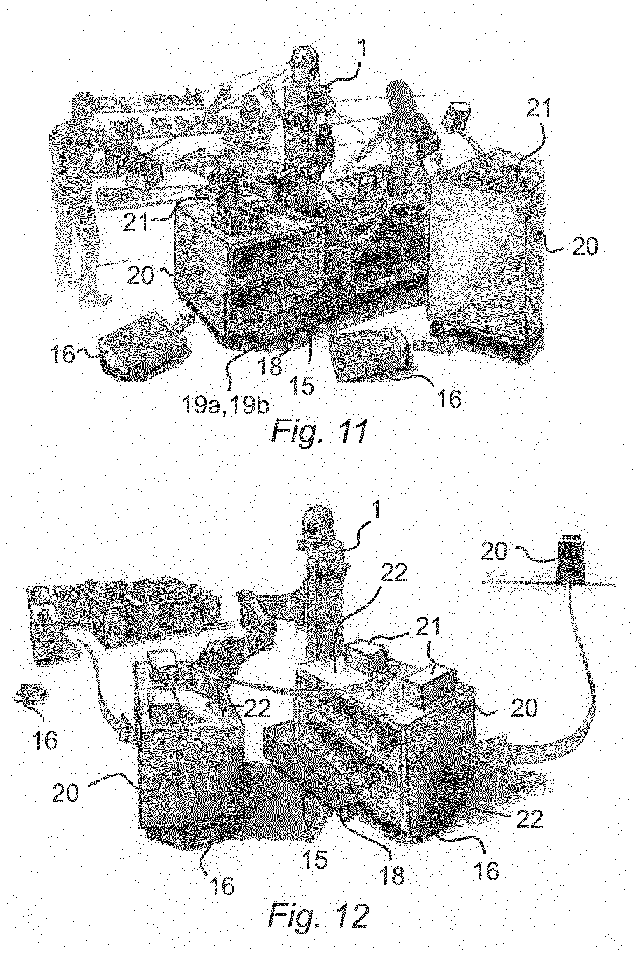

Fig. 9 bis Fig. 12 zeigen verschiedene Szenarien eines beispielhaften Logistiksystems bei denen der Roboterarm 1 auf einer Aufstellvorrichtung 15 montiert ist. Ein fahrerloses Transportfahrzeug 16 ist ausgebildet wahlweise die Aufstellvorrichtung 15 örtlich versetzen zu können, insbesondere verfahren zu können oder einen Warenträger 17 örtlich versetzen zu können, insbesondere verfahren zu können.

Der so gebildete mobile Roboter weist die örtlich versetzbare Aufstellvorrichtung 15 und den an der Aufstellvorrichtung 15 angeordneten Roboterarm 1 auf. Die Aufstellvorrichtung 15 ist zum mobilen Tragen des Roboterarms 1 ausgebildet und weist eine Ankoppelvorrichtung auf, die zum Ankoppeln des fahrerlosen Transportfahrzeugs 16 an die Aufstellvorrichtung 15 ausgebildet ist, derart, dass der Roboterarm 1 durch Bewegen des fahrerlosen Transportfahrzeugs 16 von seiner Stelle bewegt und dadurch örtlich versetzt werden kann.

Die Aufstellvorrichtung 15 weist im Falle des vorliegenden Ausführungsbeispiels ein Gestell 18 auf, das Standfüße 19a umfasst und eine Abstützeinrichtung, an der die Aufstellvorrichtung 15 durch das fahrerlose Transportfahrzeug 16 angehoben werden kann.

Die Aufstellvorrichtung 15 kann statt Standfüßen 19a ein Fahrwerk mit mehreren antriebslosen Rädern 19b aufweisen, die zum rollenden Bewegen der Aufstellvorrichtung 15 und somit zum rollenden Bewegen des Roboterarms 1 von einer ersten örtlichen Stelle zu einer zweiten örtlichen Stelle ausgebildet sind.

Das Logistiksystem weist im Falle des dargestellten Ausführungsbeispiels mehrere Warenträger 20 auf, die zum vorübergehenden Lagern von Waren 21 ausgebildet sind. Das Logistiksystem weist außerdem mehrere fahrerlose Transportfahrzeuge 16 auf, die zum Transportieren der einzelnen Warenträger 20 ausgebildet sind.

Das Logistiksystem kann mit Hilfe der Robotersteuerung 12 gemäß eines Roboterprogramms angesteuert werden, um den Endeffektor 11 in seinen räumlichen Positionen und Orientierungen automatisch zu bewegen, wobei in der Robotersteuerung 12 ein geometrisches Modell der Gestalt des Warenträgers 20, der wenigstens eine Ablagefläche 22 aufweist, gespeichert ist, und die Robotersteuerung 12 eingerichtet ist, den Endeffektor 11 unter Berücksichtigung des geometrischen Modells der Gestalt des Warenträgers 20 und der wenigstens einen Ablagefläche 22 zu bewegen, derart, dass mittels des Endeffektors 11, der zum Greifen von Waren 21 ausgebildet ist, die Waren 21 im Ankopplungszustand des Warenträgers 20 an der Aufstellvorrichtung 15 mittels des Endeffektors 11 von Ablageflächen 22 des Warenträgers 20 entnommen und/oder auf die Ablageflächen 22 des Warenträgers 20 aufgegeben werden können.

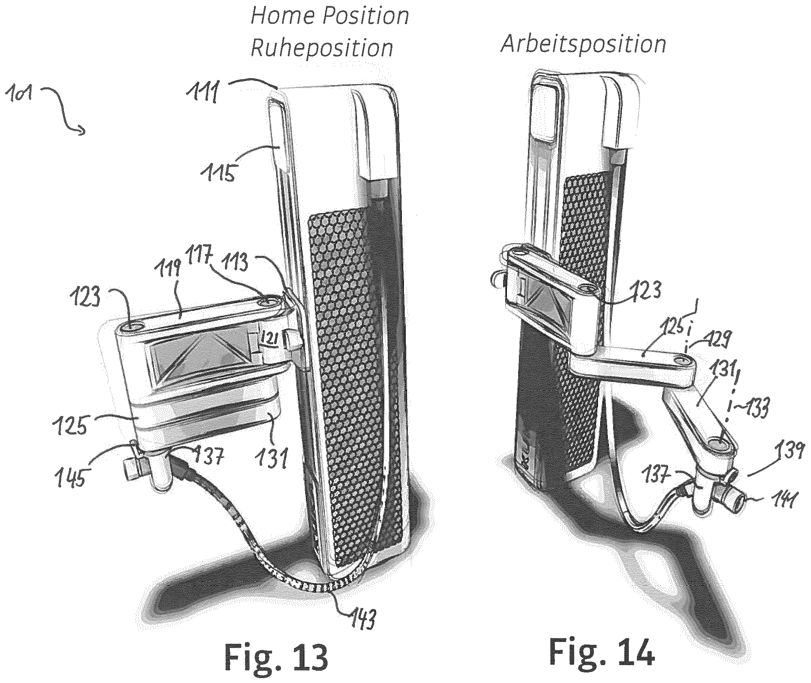

Die Figur 13 zeigt eine Ladevorrichtung 101 zum Aufladen eines Elektrofahrzeugs mit einem Roboterarm 102 in Ruheposition, die Ladevorrichtung 101 umfasst ein Grundgestell 111, einen am Grundgestell 111 in einer vertikalen Richtung verschiebbar gelagerten Schlitten 113, einen ersten Motor 115, der ausgebildet ist, den Schlitten 113 relativ zum Grundgestell 111 zu verstellen, ein am Schlitten 113 um eine vertikale erste Drehachse 117 schwenkbar gelagertes proximales Schwenkglied 119, einen zweiten Motor 121, der ausgebildet ist, das proximale Schwenkglied 119 relativ zum Schlitten 113 zu schwenken, ein am proximalen Schwenkglied 119 um eine vertikale zweite Drehachse 123 schwenkbar gelagertes Zwischenschwenkglied 125, einen dritten Motor, der ausgebildet ist, das Zwischenschwenkglied 125 relativ zum proximalen Schwenkglied 119 zu schwenken, ein am Zwischenschwenkglied 125 um eine vertikale dritte Drehachse 129 schwenkbar gelagertes distales Schwenkglied 131, einen vierten Motor, der ausgebildet ist, das distale Schwenkglied 131 relativ zum Zwischenschwenkglied 125 zu schwenken, einen am distalen Schwenkglied 131 um eine horizontale vierte Drehachse 133 drehbar gelagerten Stellgliedträger 137, ein am Stellgliedträger 137 verlagerbar gelagerte elektrische Verbindervorrichtung 139. Die Verbindervorrichtung 139 ist insbesondere rückstellfähig am Stellgliedträger 137 gelagert und bevorzugt zumindest um eine erste Linearrichtung verschiebbar und/oder eine fünfte Drehachse drehbar gelagert. Ein elektrischer Steckverbinder 141 kann Bestandteil der Verbindervorrichtung 139 sein. Eine elektrische Leitung 143 kann eine elektrische Verbindung zwischen dem elektrischen Steckverbinder 141 und dem Grundgestell 11 herstellen. Des Weiteren kann eine Sensoreinrichtung 145 vorgesehen sein, um den Steckvorgang zwischen der Verbindervorrichtung 139 und einer komplementären Verbindervorrichtung (nicht gezeigt), die Bestandteil eines Elektrofahrzeugs sein kann, zu erfassen, insbesondere optisch zu erfassen.

Die Figur 14 zeigt die Ladevorrichtung 101 aus Figur 13 in einer Arbeitsposition, in welcher proximales Schwenkglied 119, Zwischenschwenkglied 125 und/oder distales Schwenkglied 131 zueinander verlagert bzw. verschwenkt wurden.

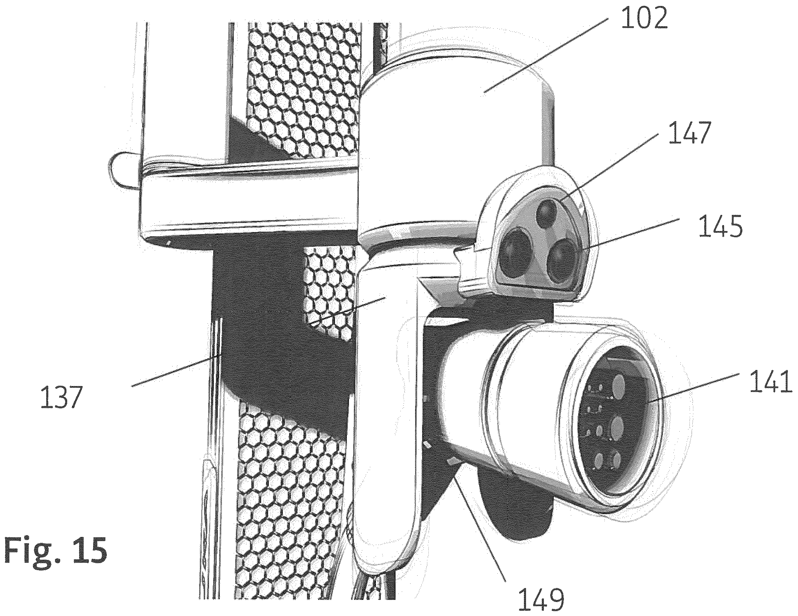

Die Figur 15 zeigt den Stellgliedträger 137 mit Sensoreinrichtung 145, Die Sensoreinrichtung kann bevorzugt eine Kamera 145 sein, insbesondere eine stereoskopische Kamera bzw. eine Tiefenbildkamera, wobei eine künstliche Lichtquelle 147 vorgesehen sein kann, um das Erfassungsfled der Kamera zu beleuchten.

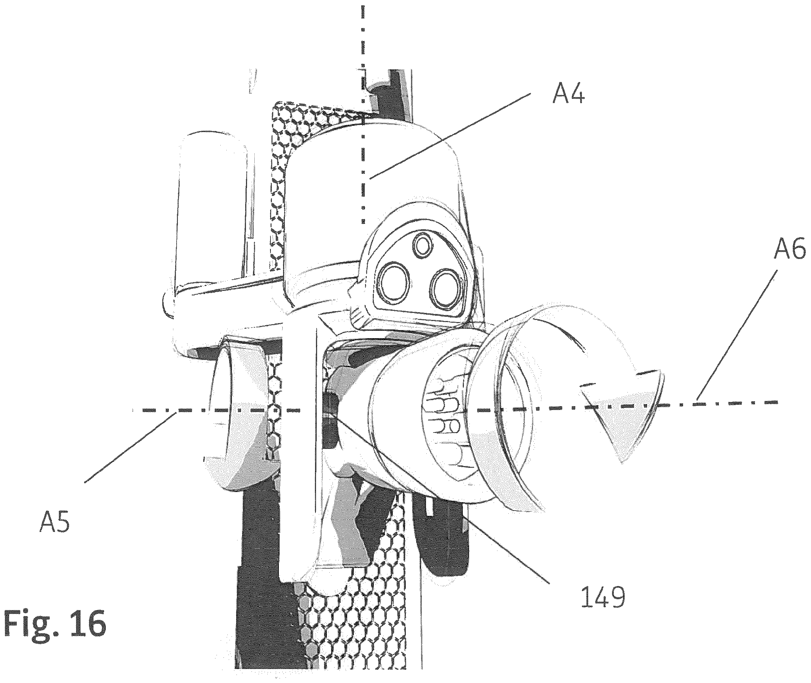

Die Figur 16 zeigt den Stellgliedträger 137 aus Figur 15 mit den verschiedenen Freiheitsgrade der Bewegung des Steckverbinders 141 als bevorzugtem Endeffektor. Die Achse A4 beschreibt die Rotation um eine vertikale Drehachse. Die Achse A5 beschreibt ein Nicken um eine horizontale Drehachse. Die Achse A6 beschreibt ein Rollen um eine zur Achse A5 im Wesentlichen senkrecht stehende horizontale Drehachse, die insbesondere im Wesentlichen parallel zur Steckrichtung des Steckverbinders 141 ausgerichtet sein kann. Der Steckverbinder 141 ist dabei mittels einer ein Elastomer aufweisenden Lagerung 149 gelagert, so dass der Steckverbinder 141 in begrenztem Umfang schwenkbar bzw. verlagerbar ist, ohne aktiv durch Motoren des Roboterarm bewegt zu werden.

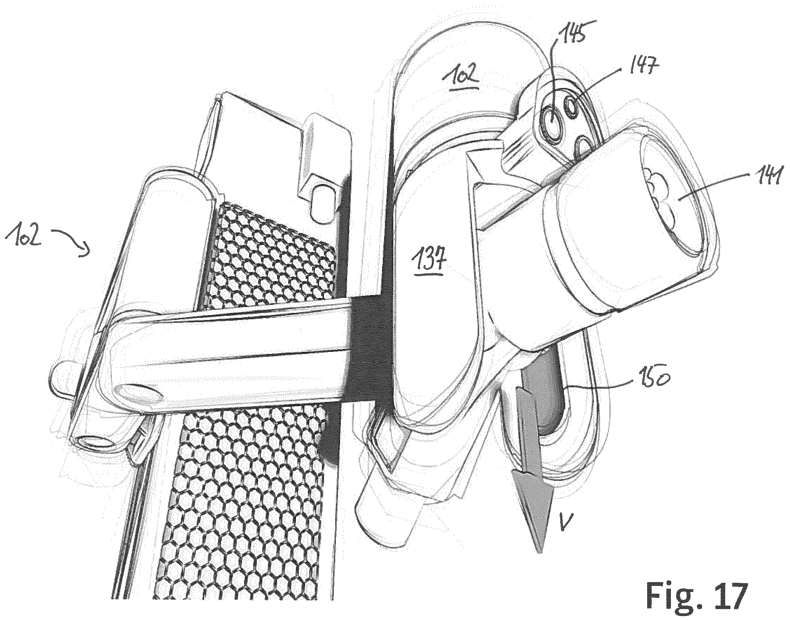

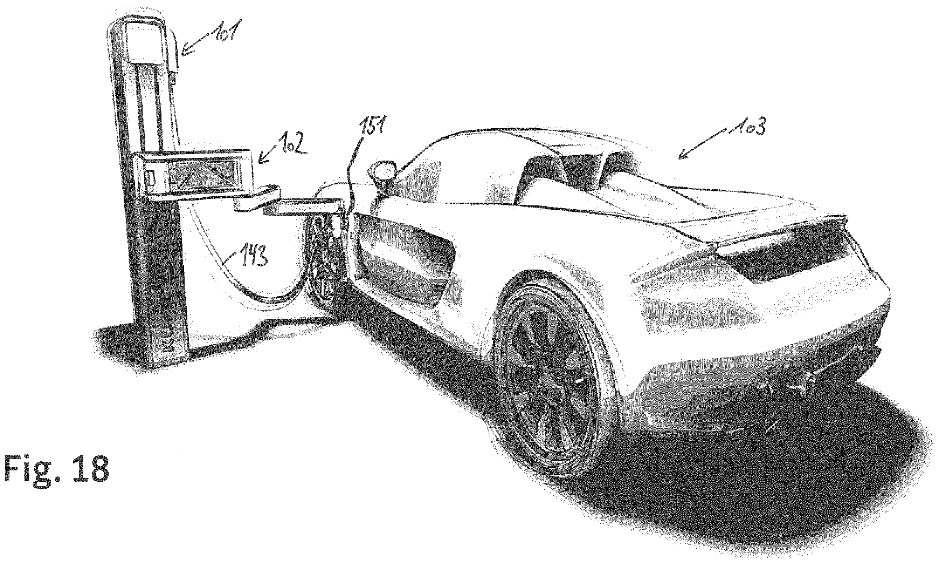

Die Figur 17 zeigt den Stellgliedträger 137 aus Figur 15 in einer anderen Perspektive. Der Stellgliedträger 137 kann insbesondere eine Linearlagerung 150 des Steckverbinders 141 aufweisen, bevorzugt in Form eine Kulissenführung. Dadurch kann vorteilhafterweise ein nachträgliches Verschieben des Steckverbinders 141 entlang der Richtung V , beispielsweise durch Absenken des Kraftfahrzeugs 103 (in Figur 18 gezeigt) durch nachlassende Luftfederung, ausgeglichen werden.

Die Figur 18 zeigt die Ladevorrichtung 101 aus den Figuren 13 bis 17 in Arbeitsposition mit einem angeschlossenen Kraftfahrzeug 103, welches eine komplementäre Verbindervorrichtung 151 aufweist, um mit der Verbindervorrichtung 139 in elektrischen Kontakt zu treten. Dabei wird über die elektrische Leitung 143 Strom aus einer Stromquelle im Grundgestell 111 und die Verbindervorrichtungen 139 und 151 in das Kraftfahrzeug übertragen, um dieses aufzuladen.

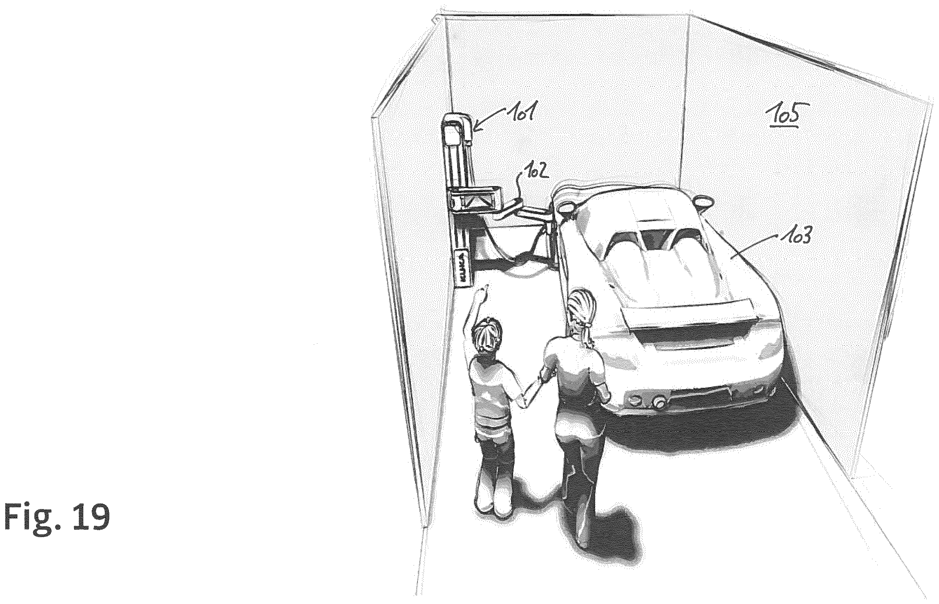

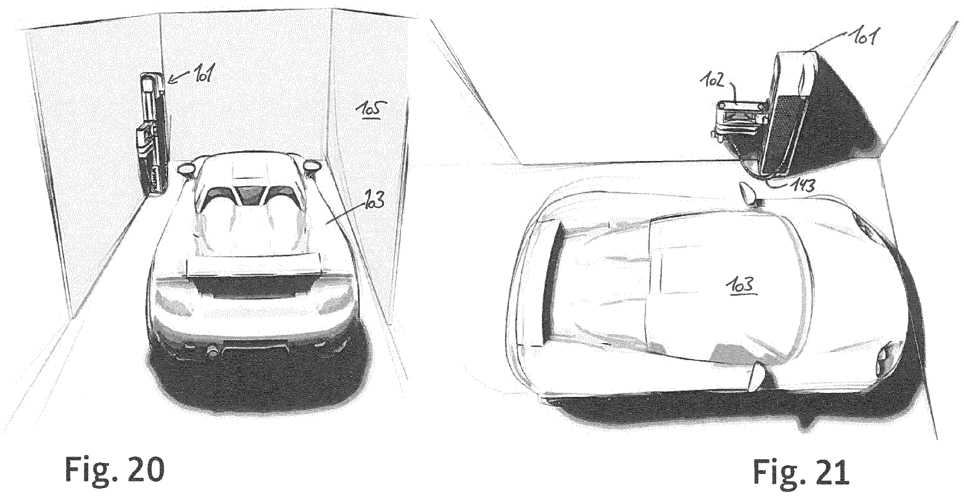

Die Figur 19 zeigt die Ladevorrichtung 101 aus den Figuren 13 bis 18 in Arbeitsposition mit einem angeschlossenen Kraftfahrzeug 103 in einer Garage, wobei die Ladevorrichtung 101 an der Garagenwand 105 und/oder am Garagenboden befestigt sein kann. Die Figuren 20 und 21 zeigen die Ladevorrichtung 101 aus Figur 19 in Ruheposition mit einem nicht angeschlossenen Kraftfahrzeug 103 in der Garage, wobei die Ladevorrichtung 101 bevorzugt maximale Dimensionen von ca. 68 x ca. 42 x ca. 37 cm (Höhe x Breite x Tiefe) aufweist und insbesondere ein maximales Gewicht von etwa 30 kg aufweist, damit noch Platz zum Begehen der Garage besteht und die Tragkraft der Garagenwand gering bleiben kann.

### Bezugszeichenliste

- 101: Ladevorrichtung
- 102: Roboterarm
- 103: Kraftfahrzeug
- 105: Garagenwand
- 111: Grundgestell
- 113: Schlitten
- 115: erster Motor
- 117: erste Drehachse
- 119: proximales Schwenkglied
- 121: zweiter Motor
- 123: zweite Drehachse
- 125: Zwischenschwenkglied
- 127: dritter Motor
- 129: dritte Drehachse
- 131: distales Schwenkglied
- 133: vierte Drehachse
- 135: vierter Motor
- 137: Träger
- 139: Verbindervorrichtung
- 141: Steckverbinder
- 143: elektrische Leitung
- 145: Sensoreinrichtung
- 147: Lichtquelle
- 149: Lagerung
- 150: Linearlagerung
- 151: komplementäre Verbindervorrichtung

## Patentansprüche

1. Roboterarm, aufweisend:
- ein Grundgestell (2),
- einen am Grundgestell (2) in einer vertikalen Richtung verschiebbar gelagerten Schlitten (3), und einen ersten Motor (M1), der ausgebildet ist, den Schlitten (3) relativ zum Grundgestell (2) zu verstellen,
- ein am Schlitten (3) um eine vertikale erste Drehachse (D1) schwenkbar gelagertes proximales Schwenkglied (4), und einen zweiten Motor (M2), der ausgebildet ist, das proximale Schwenkglied (4) relativ zum Schlitten (3) zu schwenken,
- ein am proximalen Schwenkglied (4) um eine vertikale zweite Drehachse (D2) schwenkbar gelagertes Zwischenschwenkglied (5), und einen dritten Motor (M3), der ausgebildet ist, das Zwischenschwenkglied (5) relativ zum proximalen Schwenkglied (4) zu schwenken,
- ein am Zwischenschwenkglied (5) um eine vertikale dritte Drehachse (D3) schwenkbar gelagertes distales Schwenkglied (6), und einen vierten Motor (M4), der ausgebildet ist, das distale Schwenkglied (6) relativ zum Zwischenschwenkglied (5) zu schwenken,
- einen am distalen Schwenkglied (6) um eine horizontale vierte Drehachse (D4) drehbar gelagerten Stellgliedträger (8), und weiter aufweisend:
eine erste Umschaltvorrichtung (9.1), die ausgebildet ist, den Stellgliedträger (8) zwischen einer ersten Arretierungsschwenkstellung, in welcher der Stellgliedträger (8) eine erste Stellung einnimmt und
einer zweiten Arretierungsschwenkstellung, in welcher der Stellgliedträger (8) eine von der ersten Stellung abweichende zweite Stellung einnimmt, zum mechanischen Umkonfigurieren der kinematischen Struktur des Roboterarms (1) umzuschalten,
**dadurch gekennzeichnet, dass** der Stellgliedträger (8) mittels der Umschaltvorrichtung (9.1) zwischen genau zwei Stellungen umkonfigurierbar ist.

2. Roboterarm nach Anspruch 1, weiter aufweisend:
- ein am Stellgliedträger (8) verstellbar gelagertes Stellglied (10), und eine zweite Umschaltvorrichtung (9.2), die ausgebildet ist, das Stellglied (10) zwischen einer ersten Arretierungsstellung, in welcher das Stellglied (10) eine erste Stellung einnimmt und einer zweiten Arretierungsstellung, in welcher das Stellglied (10) eine von der ersten Stellung abweichende zweite Stellung einnimmt, zum mechanischen Umkonfigurieren der kinematischen Struktur des Roboterarms (1) umzuschalten, und
- einen am Stellglied (10) um eine fünfte Drehachse (D5) drehbar gelagerten Endeffektor (11) und einen fünften Motor (M5), der ausgebildet ist, den Endeffektor (11) relativ zum Stellglied (10) zu drehen.

3. Roboterarm nach Anspruch 1 oder 2, **dadurch gekennzeichnet, dass** der Stellgliedträger (8) ein Schubgelenkträger (8a) ist, und die erste Umschaltvorrichtung (9.1) dabei ausgebildet ist, den Schubgelenkträger (8a) zwischen einer ersten Arretierungsschwenkstellung, in welcher der Schubgelenkträger (8a) als seine Stellung eine erste Orientierung einnimmt und einer zweiten Arretierungsschwenkstellung, in welcher der Schubgelenkträger (8a) eine von der ersten Orientierung abweichende zweite Orientierung einnimmt, zum mechanischen Umkonfigurieren der kinematischen Struktur des Roboterarms (1) umzuschalten, und
das Stellglied (10) ein am Schubgelenkträger (8) verschiebbar gelagertes Schubglied (10a) ist, und die zweite Umschaltvorrichtung (9.2) dabei ausgebildet ist, das Schubglied (10a) zwischen einer ersten Arretierungsschubstellung, in welcher das Schubglied (10a) als seine Stellung eine erste Position einnimmt und einer zweiten Arretierungsschubstellung, in welcher das Schubglied (10a) eine von der ersten Position abweichende zweite Position einnimmt, zum mechanischen Umkonfigurieren der kinematischen Struktur des Roboterarms (1) umzuschalten.

4. Roboterarm nach Anspruch 3, **dadurch gekennzeichnet, dass** die erste Umschaltvorrichtung (9.1), die ausgebildet ist, den Schubgelenkträger (8a) zwischen der ersten Arretierungsschwenkstellung und der zweiten Arretierungsschwenkstellung umzuschalten, ein erstes Arretierungsmittel aufweist, welches ausgebildet ist, den Schubgelenkträger (8a) in seiner ersten Orientierung in einer vertikalen Orientierung zu halten, in der das Schubglied (10a) vertikal verstellbar bezüglich des Schubgelenkträgers (8a) verstellbar ist und ein zweites Arretierungsmittel aufweist, welches ausgebildet ist, den Schubgelenkträger (8a) in seiner zweiten Orientierung in einer horizontalen Orientierung zu halten, in der das Schubglied (10a) horizontal verstellbar bezüglich des Schubgelenkträgers (8a) verstellbar ist.

5. Roboterarm nach Anspruch 3 oder 4, **dadurch gekennzeichnet, dass** die zweite Umschaltvorrichtung (9.2), die ausgebildet ist, das Schubglied (10a) zwischen der ersten Arretierungsschubstellung und der zweiten Arretierungsschubstellung umzuschalten, ein drittes Arretierungsmittel aufweist, welches ausgebildet ist, das Schubglied (10a) in seiner ersten Position in einer bezüglich des Schubgelenkträgers (8a) eingefahrenen Position zu halten und ein viertes Arretierungsmittel aufweist, welches ausgebildet ist, das Schubglied (10a) in seiner zweiten Position in einer bezüglich des Schubgelenkträgers (8) ausgefahrenen Position zu halten.

6. Roboterarm nach Anspruch 1, **dadurch gekennzeichnet, dass** der Stellgliedträger (8) ein Schwenkgelenkträger (8b) ist, und die erste Umschaltvorrichtung (9.1) dabei ausgebildet ist, den Schwenkgelenkträger (8b) zwischen einer ersten Arretierungsschwenkstellung, in welcher der Schwenkgelenkträger (8b) als seine Stellung eine erste Orientierung einnimmt und einer zweiten Arretierungsschwenkstellung, in welcher der Schwenkgelenkträger (8b) eine von der ersten Orientierung abweichende zweite Orientierung einnimmt, zum mechanischen Umkonfigurieren der kinematischen Struktur des Roboterarms (1) umzuschalten, und
das Stellglied (10) ein am Schwenkgelenkträger (8b) drehbar gelagertes Schwenkglied (10b) ist, und die zweite Umschaltvorrichtung (9.2) dabei ausgebildet ist, das Schwenkglied (10b) zwischen einer ersten Arretierungsschwenkstellung, in welcher das Schwenkglied (10b) als seine Stellung eine erste Orientierung einnimmt und einer zweiten Arretierungsschwenkstellung, in welcher das Schwenkglied (10b) eine von der ersten Orientierung abweichende zweite Orientierung einnimmt, zum mechanischen Umkonfigurieren der kinematischen Struktur des Roboterarms (1) umzuschalten.

7. Roboterarm nach Anspruch 6, **dadurch gekennzeichnet, dass** die erste Umschaltvorrichtung (9.1), die ausgebildet ist, den Schwenkgelenkträger (8b) zwischen der ersten Arretierungsschwenkstellung und der zweiten Arretierungsschwenkstellung umzuschalten, ein erstes Arretierungsmittel aufweist, welches ausgebildet ist, den Schwenkgelenkträger (8b) in seiner ersten Orientierung in einer horizontalen Orientierung zu halten, in der das Schwenkglied (10b) drehbar bezüglich des Schwenkgelenkträgers (8b) verstellbar ist und ein zweites Arretierungsmittel aufweist, welches ausgebildet ist, den Schwenkgelenkträger (8b) in seiner zweiten Orientierung in einer vertikalen Orientierung zu halten, in der das Schwenkglied (10b) schwenkbar bezüglich des Schwenkgelenkträgers (8b) verstellbar ist.

8. Roboterarm nach Anspruch 6 oder 7, **dadurch gekennzeichnet, dass** die zweite Umschaltvorrichtung (9.2), die ausgebildet ist, das Schwenkglied (10b) zwischen der ersten Arretierungsschwenkstellung und der zweiten Arretierungsschwenkstellung umzuschalten, ein drittes Arretierungsmittel aufweist, welches ausgebildet ist, das Schwenkglied (10b) in seiner ersten Orientierung in einer bezüglich des Schwenkgelenkträgers (8b) angeordneten bzw. umgeschwenkten Orientierung zu halten und ein viertes Arretierungsmittel aufweist, welches ausgebildet ist, das Schwenkglied (10b) in seiner zweiten Orientierung in einer bezüglich des Schwenkgelenkträgers (8b) umgeschwenkten Orientierung zu halten.

9. Roboterarm nach einem der vorherigen Ansprüche, **dadurch gekennzeichnet, dass** die erste Umschaltvorrichtung (9.1) eine erste Antriebsvorrichtung aufweist, die ausgebildet ist, den Schubgelenkträger (8a) oder den Schwenkgelenkträger (8b) in die erste Orientierung zu bringen und eine zweite Antriebsvorrichtung aufweist, die ausgebildet ist, den Schubgelenkträger (8a) oder den Schwenkgelenkträger (8b) in die zweite Orientierung zu bringen.

10. Roboterarm nach einem der vorherigen Ansprüche, **dadurch gekennzeichnet, dass** die zweite Umschaltvorrichtung (9.2) eine dritte Antriebsvorrichtung aufweist, die ausgebildet ist, das Schubglied (10a) oder das Schwenkglied (10b) in die erste Position oder erste Orientierung zu bringen und eine vierte Antriebsvorrichtung aufweist, die ausgebildet ist, das Schubglied (10a) oder das Schwenkglied (10b)in die zweite Position oder zweite Orientierung zu bringen.

11. Roboterarm nach Anspruch 9 oder 10, **dadurch gekennzeichnet, dass** wenigstens eine von erster Antriebsvorrichtung, zweiter Antriebsvorrichtung, dritter Antriebsvorrichtung und vierter Antriebsvorrichtung wenigstens ein Stellmittel aus der Gruppe von elektro-magnetischem Stellmittel, hydraulischem Stellmittel, pneumatischem Stellmittel und/oder federelastischem Stellmittel aufweist.

12. Roboterarm nach einem der vorherigen Ansprüche, **dadurch gekennzeichnet, dass** im Drehmomenten-Übertragungsweg zwischen dem Schlitten (3) und dem proximalen Schwenkglied (4) eine erste Sicherheitskupplung (13.1) angeordnet ist, die ausgebildet ist, eine drehmomentübertragende Verbindung von dem zweiten Motor (M2) auf das proximale Schwenkglied (4) herzustellen, wenn das momentan übertragene Drehmoment ein der ersten Sicherheitskupplung (13.1) zugeordnetes Schaltmoment unterschreitet und die drehmomentübertragende Verbindung von dem zweiten Motor (M2) auf das proximale Schwenkglied (4) zu unterbrechen, wenn das momentan übertragene Drehmoment das der ersten Sicherheitskupplung (13.1) zugeordnete Schaltmoment überschreitet.

13. Roboterarm nach Anspruch 12, **dadurch gekennzeichnet, dass** die erste Sicherheitskupplung (13.1) eine erste Sperreinrichtung (14.1) aufweist, die ausgebildet ist, in Ihrem Sperrzustand die drehmomentübertragende Verbindung von dem zweiten Motor (M2) auf das proximale Schwenkglied (4) auch dann aufrecht zu erhalten, wenn das momentan übertragene Drehmoment das der ersten Sicherheitskupplung (13.1) zugeordnete Schaltmoment überschreitet.

14. Roboterarm nach einem der vorherigen Ansprüche, **dadurch gekennzeichnet, dass** im Drehmomenten-Übertragungsweg zwischen dem proximalen Schwenkglied (4) und dem Zwischenschwenkglied (5) eine zweite Sicherheitskupplung (13.2) angeordnet ist, die ausgebildet ist, eine drehmomentübertragende Verbindung von dem dritten Motor (M3) auf das Zwischenschwenkglied (5) herzustellen, wenn das momentan übertragene Drehmoment ein der zweiten Sicherheitskupplung (13.2) zugeordnetes Schaltmoment unterschreitet und die drehmomentübertragende Verbindung von dem dritten Motor (M3) auf das Zwischenschwenkglied (5) zu unterbrechen, wenn das momentan übertragene Drehmoment das der zweiten Sicherheitskupplung (13.2) zugeordnete Schaltmoment überschreitet.

15. Roboterarm nach Anspruch 14, **dadurch gekennzeichnet, dass** die zweite Sicherheitskupplung (13.2) eine zweite Sperreinrichtung (14.2) aufweist, die ausgebildet ist, in Ihrem Sperrzustand die drehmomentübertragende Verbindung von dem dritten Motor (M3) auf das Zwischenschwenkglied (5) auch dann aufrecht zu erhalten, wenn das momentan übertragene Drehmoment das der zweiten Sicherheitskupplung (13.2) zugeordnete Schaltmoment überschreitet.

## Claims

1. Robot arm, having:
- a basic frame (2),
- a slide (3), which is mounted displaceably in a vertical direction on the basic frame (2), and a first motor (M1), which is designed to adjust the slide (3) relative to the basic frame (2),
- a proximal pivoting member (4), which is mounted pivotably about a vertical first axis of rotation (D1) on the slide (3), and a second motor (M2), which is designed to pivot the proximal pivoting member (4) relative to the slide (3),
- an intermediate pivoting member (5), which is mounted pivotably about a vertical second axis of rotation (D2) on the proximal pivoting member (4), and a third motor (M3), which is designed to pivot the intermediate pivoting member (5) relative to the proximal pivoting member (4),
- a distal pivoting member (6), which is mounted pivotably about a vertical third axis of rotation (D3) on the intermediate pivoting member (5), and a fourth motor (M4), which is designed to pivot the distal pivoting member (6) relative to the intermediate pivoting member (5),
- an actuating member carrier (8), which is mounted rotatably about a horizontal fourth axis of rotation (D4) on the distal pivoting member (6), and furthermore having:
a first switchover device (9.1), which is designed to switch over the actuating member carrier (8) between a first locking pivoting position, in which the actuating member carrier (8) takes up a first position, and a second locking pivoting position, in which the actuating member carrier (8) takes up a second position, which deviates from the first position, for mechanically reconfiguring the kinematic structure of the robot arm (1),
**characterized in that** the actuating member carrier (8) can be reconfigured between precisely two positions by means of the switchover device (9.1).

2. Robot arm according to Claim 1, furthermore having:
- an actuating member (10), which is mounted adjustably on the actuating member carrier (8), and a second switchover device (9.2), which is designed to switch over the actuating member (10) between a first locking position, in which the actuating member (10) takes up a first position, and a second locking position, in which the actuating member (10) takes up a second position, which deviates from the first position, for mechanically reconfiguring the kinematic structure of the robot arm (1), and
- an end effector (11), which is mounted rotatably about a fifth axis of rotation (D5) on the actuating member (10), and a fifth motor (M5), which is designed to rotate the end effector (11) relative to the actuating member (10).

3. Robot arm according to Claim 1 or 2, **characterized in that** the actuating member carrier (8) is a sliding joint carrier (8a), and the first switchover device (9.1) is designed to switch over the sliding joint carrier (8a) between a first locking pivoting position, in which the sliding joint carrier (8a) takes up a first orientation as its position, and a second locking pivoting position, in which the sliding joint carrier (8a) takes up a second orientation, which deviates from the first orientation, for mechanically reconfiguring the kinematic structure of the robot arm (1), and
the actuating member (10) is a sliding member (10a), which is mounted displaceably on the sliding joint carrier (8), and the second switchover device (9.2) is designed to switch over the sliding member (10a) between a first locking sliding position, in which the sliding member (10a) takes up a first position as its position, and a second locking sliding position, in which the sliding member (10a) takes up a second position, which deviates from the first position, for mechanically reconfiguring the kinematic structure of the robot arm (1) .

4. Robot arm according to Claim 3, **characterized in that** the first switchover device (9.1), which is designed to switch over the sliding joint carrier (8a) between the first locking pivoting position and the second locking pivoting position, has a first locking means, which is designed to hold the sliding joint carrier (8a) in its first orientation in a vertical orientation in which the sliding member (10a) is adjustable in a vertically adjustable manner with respect to the sliding joint carrier (8a), and has a second locking means, which is designed to hold the sliding joint carrier (8a) in its second orientation in a horizontal orientation in which the sliding member (10a) is adjustable in a horizontally adjustable manner with respect to the sliding joint carrier (8a).

5. Robot arm according to Claim 3 or 4, **characterized in that** the second switchover device (9.2), which is designed to switch over the sliding member (10a) between the first locking sliding position and the second locking sliding position, has a third locking means, which is designed to hold the sliding member (10a) in its first position in a position which is retracted with respect to the sliding joint carrier (8a), and has a fourth locking means, which is designed to hold the sliding member (10a) in its second position in a position which is extended with respect to the sliding joint carrier (8) .

6. Robot arm according to Claim 1, **characterized in that** the actuating member carrier (8) is a pivoting joint carrier (8b), and the first switchover device (9.1) is designed to switch over the pivoting joint carrier (8b) between a first locking pivoting position, in which the pivoting joint carrier (8b) takes up a first orientation as its first position, and a second locking pivoting position, in which the pivoting joint carrier (8b) takes up a second orientation, which deviates from the first orientation, for mechanically reconfiguring the kinematic structure of the robot arm (1), and
the actuating member (10) is a pivoting member (10b), which is mounted rotatably on the pivoting joint carrier (8b), and the second switchover device (9.2) is designed to switch over the pivoting member (10b) between a first locking pivoting position, in which the pivoting member (10b) takes up a first orientation as its position, and a second locking pivoting position, in which the pivoting member (10b) takes up a second orientation, which deviates from the first orientation, for mechanically reconfiguring the kinematic structure of the robot arm (1) .

7. Robot arm according to Claim 6, **characterized in that** the first switchover device (9.1), which is designed to switch over the pivoting joint carrier (8b) between the first locking pivoting position and the second locking pivoting position, has a first locking means, which is designed to hold the pivoting joint carrier (8b) in its first orientation in a horizontal orientation, in which the pivoting member (10b) is adjustable rotatably with respect to the pivoting joint carrier (8b), and has a second locking means, which is designed to hold the pivoting joint carrier (8b) in its second orientation in a vertical orientation, in which the pivoting member (10b) is adjustable pivotably with respect to the pivoting joint carrier (8b).

8. Robot arm according to Claim 6 or 7, **characterized in that** the second switchover device (9.2), which is designed to switch over the pivoting member (10b) between the first locking pivoting position and the second locking pivoting position, has a third locking means, which is designed to hold the pivoting member (10b) in its first orientation in an orientation arranged or pivoted around with respect to the pivoting joint carrier (8b), and has a fourth locking means, which is designed to hold the pivoting member (10b) in its second orientation in an orientation pivoted around with respect to the pivoting joint carrier (8b).

9. Robot arm according to one of the preceding claims, **characterized in that** the first switchover device (9.1) has a first drive device, which is designed to bring the sliding joint carrier (8a) or the pivoting joint carrier (8b) into the first orientation, and has a second drive device, which is designed to bring the sliding joint carrier (8a) or the pivoting joint carrier (8b) into the second orientation.

10. Robot arm according to one of the preceding claims, **characterized in that** the second switchover device (9.2) has a third drive device, which is designed to bring the sliding member (10a) or the pivoting member (10b) into the first position or first orientation, and has a fourth drive device, which is designed to bring the sliding member (10a) or the pivoting member (10b) into the second position or second orientation.

11. Robot arm according to Claim 9 or 10, **characterized in that** at least one out of the first drive device, second drive device, third drive device and fourth drive device has at least one actuating means from the group consisting of an electromagnetic actuating means, hydraulic actuating means, pneumatic actuating means and/or spring-elastic actuating means.

12. Robot arm according to one of the preceding claims, **characterized in that** a first safety coupling (13.1) is arranged in the torque transmission path between the slide (3) and the proximal pivoting member (4), the first safety coupling (13.1) being designed to produce a torque-transmitting connection from the second motor (M2) to the proximal pivoting member (4) if the torque currently transmitted falls short of a switching moment assigned to the first safety coupling (13.1), and to interrupt the torque-transmitting connection from the second motor (M2) to the proximal pivoting member (4) if the torque currently transmitted exceeds the switching moment assigned to the first safety coupling (13.1).

13. Robot arm according to Claim 12, **characterized in that** the first safety coupling (13.1) has a first blocking device (14.1), which, in its blocking state, is designed to maintain the torque-transmitting connection from the second motor (M2) to the proximal pivoting member (4) even if the currently transmitted torque exceeds the switching moment assigned to the first safety coupling (13.1).

14. Robot arm according to one of the preceding claims, **characterized in that** a second safety coupling (13.2) is arranged in the torque transmission path between the proximal pivoting member (4) and the intermediate pivoting member (5), the second safety coupling (13.2) being designed to produce a torque-transmitting connection from the third motor (M3) to the intermediate pivoting member (5) if the currently transmitted torque falls short of a switching moment assigned to the second safety coupling (13.2), and to interrupt the torque-transmitting connection from the third motor (M3) to the intermediate pivoting member (5) if the currently transmitted torque exceeds the switching moment assigned to the second safety coupling (13.2).

15. Robot arm according to Claim 14, **characterized in that** the second safety coupling (13.2) has a second blocking device (14.2) which, in its blocking state, is designed to maintain the torque-transmitting connection from the third motor (M3) to the intermediate pivoting member (5) even if the currently transmitted torque exceeds the switching moment assigned to the second safety coupling (13.2).

## Revendications

1. Bras robotisé, comprenant :
- un châssis de base (2),
- un chariot (3) monté sur le châssis de base (2) de manière à pouvoir coulisser dans une direction verticale, et un premier moteur (M1) qui est conçu de façon à déplacer le chariot (3) par rapport au châssis de base (2),
- un élément pivotant proximal (4) monté sur le chariot (3) de manière à pouvoir pivoter autour d'un premier axe de rotation vertical (D1), et un deuxième moteur (M2) qui est conçu de façon à faire pivoter l'élément pivotant proximal (4) par rapport au chariot (3),
- un élément pivotant intermédiaire (5) monté sur l'élément pivotant proximal (4) de manière à pouvoir pivoter autour d'un deuxième axe de rotation vertical (D2), et un troisième moteur (M3) qui est conçu de façon à faire pivoter l'élément pivotant intermédiaire (5) par rapport à l'élément pivotant proximal (4),
- un élément pivotant distal (6) monté sur l'élément pivotant intermédiaire (5) de manière à pouvoir pivoter autour d'un troisième axe de rotation vertical (D3), et un quatrième moteur (M4) qui est conçu de façon à faire pivoter l'élément pivotant distal (6) par rapport à l'élément pivotant intermédiaire (5),
- un support d'actionneur (8) monté sur l'élément pivotant distal (6) de manière à pouvoir tourner autour d'un quatrième axe de rotation horizontal (D4), et présentant en outre :
un premier dispositif de commutation (9.1) qui est conçu de façon à commuter le support d'actionneur (8) entre une première position de pivotement d'arrêt, dans laquelle le support d'actionneur (8) occupe une première position,
et une deuxième position de pivotement d'arrêt, dans laquelle le support d'actionneur (8) occupe une deuxième position différente de la première position, pour reconfigurer mécaniquement la structure cinématique du bras robotisé (1),
**caractérisé en ce que** le support d'actionneur (8) est apte à être reconfiguré entre exactement deux positions au moyen du dispositif de commutation (9.1).

2. Bras robotisé selon la revendication 1, présentant en outre :
- un actionneur (10) monté de manière réglable sur le support d'actionneur (8), et un deuxième dispositif de commutation (9.2) qui est conçu de façon à commuter l'actionneur (10) entre une première position d'arrêt, dans laquelle l'actionneur (10) prend une première position, et une deuxième position d'arrêt, dans laquelle l'actionneur (10) prend une deuxième position différente de la première position, pour reconfigurer mécaniquement la structure cinématique du bras robotisé (1), et
- un effecteur d'extrémité (11) monté sur l'actionneur (10) de manière à pouvoir tourner autour d'un cinquième axe de rotation (D5) et un cinquième moteur (M5) qui est conçu de façon à faire tourner l'effecteur d'extrémité (11) par rapport à l'actionneur (10).

3. Bras robotisé selon la revendication 1 ou 2, **caractérisé en ce que** le support d'actionneur (8) est un support d'articulation de poussée (8a), et le premier dispositif de commutation (9.1) est alors conçu de façon à déplacer le support d'articulation de poussée (8a) entre une première position de pivotement d'arrêt, dans laquelle le support d'articulation de poussée (8a) prend une première orientation en tant que sa position, et une deuxième position de pivotement d'arrêt, dans laquelle le support d'articulation de poussée (8a) prend une deuxième orientation différente de la première orientation, pour reconfigurer mécaniquement la structure cinématique du bras robotisé (1), et l'actionneur (10) est un organe de poussée (10a) monté de manière déplaçable sur le support d'articulation de poussée (8), et le deuxième dispositif de commutation (9.2) est alors agencé pour commuter l'organe de poussée (10a) entre une première position de poussée d'arrêt, dans laquelle l'organe de poussée (10a) occupe une première position en tant que sa position, et une deuxième position de poussée d'arrêt, dans laquelle l'organe de poussée (10a) occupe une deuxième position différente de la première position, pour reconfigurer mécaniquement la structure cinématique du bras robotique (1) .

4. Bras robotisé selon la revendication 3, **caractérisé en ce que** le premier dispositif de commutation (9.1) qui est agencé pour déplacer le support d'articulation de poussée (8a) entre la première position de pivotement d'arrêt et la deuxième position de pivotement d'arrêt, comprend un premier moyen d'arrêt conçu pour maintenir le support d'articulation de poussée (3a) dans sa première orientation dans une orientation verticale, dans laquelle l'élément de poussée (10a) est réglable verticalement par rapport au support d'articulation de poussée (8a) et un deuxième moyen d'arrêt qui est conçu de façon à maintenir le support d'articulation de poussée (8a) dans sa deuxième orientation dans une orientation horizontale dans laquelle l'élément de poussée (10a) est réglable horizontalement par rapport au support d'articulation de poussée (8a).

5. Bras robotisé selon la revendication 3 ou 4, **caractérisé en ce que** le deuxième dispositif de commutation (9.2), qui est conçu pour commuter l'organe de poussée (10a) entre la première position de poussée d'arrêt et la deuxième position de poussée d'arrêt, comprend un troisième moyen d'arrêt agencé pour maintenir l'organe de poussée (10a) dans sa première position dans une position rétractée par rapport au support d'articulation de poussée (8a) et comprend un quatrième moyen d'arrêt agencé pour maintenir l'organe de poussée (10a) dans sa deuxième position dans une position déployée par rapport au support d'articulation de poussée (8) .

6. Bras robotisé selon la revendication 1, **caractérisé en ce que** le support d'actionneur (8) est un support d'articulation pivotante (8b), et le premier dispositif de commutation (9.1) est conçu de façon à déplacer le support d'articulation pivotante (8b) entre une première position de pivotement d'arrêt, dans laquelle le support d'articulation pivotante (8b) prend une première orientation en tant que sa position, et une deuxième position de pivotement d'arrêt, dans laquelle le support d'articulation pivotante (8b) prend une deuxième orientation différente de la première orientation, pour reconfigurer mécaniquement la structure cinématique du bras robotisé (1), et l'actionneur (10) est un organe pivotant (10b) monté à rotation sur le support d'articulation pivotante (8b), et le deuxième dispositif de commutation (9.2) est alors configuré pour commuter l'organe de pivotement (10b) entre une première position de pivotement d'arrêt, dans laquelle l'organe de pivotement (10b) prend une première orientation en tant que sa position, et une deuxième position de pivotement d'arrêt, dans laquelle l'organe de pivotement (10b) prend une deuxième orientation différente de la première orientation, pour reconfigurer mécaniquement la structure cinématique du bras robotique (1).

7. Bras robotisé selon la revendication 6, **caractérisé en ce que** le premier dispositif de commutation (9.1), qui est conçu pour déplacer le support d'articulation pivotante (8b) entre la première position de pivotement d'arrêt et la deuxième position de pivotement d'arrêt, comprend un premier moyen d'arrêt conçu pour maintenir le support d'articulation pivotante (8b) dans sa première orientation dans une orientation horizontale, dans laquelle l'organe de pivotement (10b) est réglable en rotation par rapport au support d'articulation pivotante (8b) et un deuxième moyen d'arrêt qui est conçu de façon à maintenir le support d'articulation pivotante (8b) dans sa deuxième orientation dans une orientation verticale dans laquelle l'organe de pivotement (10b) est réglable en pivotement par rapport au support d'articulation pivotante (8b).

8. Bras robotisé selon la revendication 6 ou 7, **caractérisé en ce que** le deuxième dispositif de commutation (9.2) agencé pour déplacer l'organe de pivotement (10b) entre la première position de pivotement d'arrêt et la deuxième position de pivotement d'arrêt, comprend un troisième moyen d'arrêt agencé pour maintenir l'élément pivotant (10b) dans sa première orientation dans une orientation disposée ou basculée par rapport au support d'articulation pivotante (8b) et un quatrième moyen d'arrêt qui est conçu de façon à maintenir l'élément pivotant (10b) dans sa deuxième orientation dans une orientation basculée par rapport au support d'articulation pivotante (8b).

9. Bras robotisé selon l'une quelconque des revendications précédentes, **caractérisé en ce que** le premier dispositif de commutation (9.1) comprend un premier dispositif d'entraînement configuré pour amener le support d'articulation de poussée (8a) ou le support d'articulation de pivotement (8b) dans la première orientation et ayant un deuxième dispositif d'entraînement configuré pour amener le support d'articulation de poussée (8a) ou le support d'articulation de pivotement (8b) dans la deuxième orientation.

10. Bras robotisé selon l'une quelconque des revendications précédentes, **caractérisé en ce que** le deuxième dispositif de commutation (9.2) comporte un troisième dispositif d'entraînement configuré pour amener l'organe de poussée (10a) ou l'organe de pivotement (10b) dans la première position ou première orientation et un quatrième dispositif d'entraînement configuré pour amener l'organe de poussée (10a) ou l'organe de pivotement (10b) dans la deuxième position ou deuxième orientation.

11. Bras robotisé selon la revendication 9 ou 10, **caractérisé en ce qu'**au moins un parmi le premier dispositif d'entraînement, le deuxième dispositif d'entraînement, le troisième dispositif d'entraînement et le quatrième dispositif d'entraînement comprend au moins un moyen d'actionnement choisi parmi un moyen d'actionnement électromagnétique, un moyen d'actionnement hydraulique, un moyen d'actionnement pneumatique et/ou un moyen d'actionnement à ressort.

12. Bras robotisé selon l'une des revendications précédentes, **caractérisé en ce que**, dans le trajet de transmission du couple entre le chariot (3) et l'élément pivotant proximal (4), est disposé un premier accouplement de sécurité (13.1) qui est conçu de façon à établir une liaison de transmission du couple du deuxième moteur (M2) à l'élément pivotant proximal (4) lorsque le couple momentanément transmis dépasse un couple de commutation assigné au premier accouplement de sécurité (13.1) et à interrompre la liaison de transmission de couple du deuxième moteur (M2) à l'élément pivotant proximal (4) lorsque le couple momentanément transmis dépasse le couple de commutation assigné au premier accouplement de sécurité (13.1).

13. Bras robotisé selon la revendication 12, **caractérisé en ce que** le premier accouplement de sécurité (13.1) présente un premier dispositif d'arrêt (14.1) qui est conçu de façon à maintenir, dans son état d'arrêt, la liaison de transmission de couple du deuxième moteur (M2) à l'élément pivotant proximal (4) même lorsque le couple momentanément transmis dépasse le couple de commutation assigné au premier accouplement de sécurité (13.1).

14. Bras robotisé selon l'une des revendications précédentes, **caractérisé en ce qu'**un deuxième accouplement de sécurité (13.2) est disposé dans le trajet de transmission du couple entre l'élément pivotant proximal (4) et l'élément pivotant intermédiaire (5), lequel est conçu de façon à établir une liaison de transmission du couple depuis le troisième moteur (M3) à l'élément pivotant intermédiaire (5) lorsque le couple momentanément transmis dépasse un seuil de coupure attribué au deuxième accouplement de sécurité (13.2) et à interrompre la liaison de transmission de couple du troisième moteur (M3) à l'élément pivotant intermédiaire (5) lorsque le couple transmis dépasse momentanément le couple de commutation attribué au deuxième accouplement de sécurité (13.2).

15. Bras robotisé selon la revendication 14, **caractérisé en ce que** le deuxième accouplement de sécurité (13.2) présente un deuxième dispositif d'arrêt (14.2) qui est conçu de façon à maintenir, dans son état d'arrêt, la liaison de transmission de couple du troisième moteur (M3) à l'élément de pivotement intermédiaire (5) même lorsque le couple momentanément transmis dépasse le couple de commutation assigné au deuxième accouplement de sécurité (13.2).
